(19) **Europäisches Patentamt / European Patent Office / Office européen des brevets**

(11) **EP 4 402 966 B1**

(12) **EUROPEAN PATENT SPECIFICATION**

(45) Date of publication and mention
of the grant of the patent:
**01.10.2025 Bulletin 2025/40**

(21) Application number: **21962850.0**

(22) Date of filing: **04.11.2021**

(51) International Patent Classification (IPC):
**H04W 72/04** (2023.01)    **H04L 69/28** (2022.01)

(52) Cooperative Patent Classification (CPC):
**H04W 56/0015; G08G 1/096783; H04L 69/28;**
**H04W 76/14;** H04L 5/0048; H04W 4/08;
H04W 64/00

(86) International application number:
**PCT/CN2021/128545**

(87) International publication number:
**WO 2023/077332 (11.05.2023 Gazette 2023/19)**

(54) **SYSTEM AND METHOD FOR ESTABLISHING GROUP OF COMMUNICATION NODES AND OBTAINING TRANSMISSION TIME DIFFERENCE**

SYSTEM UND VERFAHREN ZUR HERSTELLUNG EINER GRUPPE VON KOMMUNIKATIONSKNOTEN UND ZUM ERHALT DER ÜBERTRAGUNGSZEITDIFFERENZ

SYSTÈME ET PROCÉDÉ D'ÉTABLISSEMENT D'UN GROUPE DE NOEUDS DE COMMUNICATION ET D'OBTENTION DE DIFFÉRENCE DE TEMPS DE TRANSMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.07.2024 Bulletin 2024/30**

(73) Proprietor: **ZTE Corporation**
**Shenzhen, Guangdong 518057 (CN)**

(72) Inventors:
• **HE, Haigang**
**Shenzhen, Guangdong 518057 (CN)**
• **LU, Youxiong**
**Shenzhen, Guangdong 518057 (CN)**
• **BI, Feng**
**Shenzhen, Guangdong 518057 (CN)**
• **XING, Weimin**
**Shenzhen, Guangdong 518057 (CN)**

(74) Representative: **Vossius & Partner**
**Patentanwälte Rechtsanwälte mbB**
**Siebertstraße 3**
**81675 München (DE)**

(56) References cited:
**WO-A1-2021/185960    CN-A- 112 544 110**
**US-A1- 2021 204 284    US-A1- 2021 219 111**
**US-A1- 2021 219 111    US-A1- 2021 243 713**
**US-A1- 2021 306 999**

**Description**

TECHNICAL FIELD

The disclosure relates generally to wireless communications and, more particularly, to systems and methods for establishing group of communication nodes and obtaining transmission time difference.

BACKGROUND

Sidelink (SL) communication is a wireless radio communication directly between two or more user equipment devices (hereinafter "UE"). In this type of communication, two or more UEs that are geographically proximate to each other can directly communicate without going through an eNode or a base station (hereinafter "BS"), or a core network. Data transmission in sidelink communications is thus different from typical cellular network communications, which transmit data to a BS (i.e., uplink transmissions) or receive date from a BS (i.e., downlink transmissions). In sidelink communications, data is transmitted directly from a source UE to a target UE through the Unified Air Interface, e.g., PCS interface, without passing through a BS.

In within network coverage, all UEs are within network coverage of the BS. In partial network coverage, at least one UE is within network coverage and at least another UE is outside of network coverage. In out of network coverage, all UEs are outside of network coverage. US 2021/219111 A1 is a relevant document of the prior art.

SUMMARY

The invention is defined by the appended set of claims. The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

Embodiments of a system, device and method for providing group-related information are disclosed. In some embodiments, a first wireless communication device sends, to one or more second communication devices via a sidelink communication, a message including first information and second information. In some embodiments, the first information is related to the first wireless communication device, and the second information is related to the one or more second wireless communication devices. In some embodiments, the first wireless communication device is configured to serve as a timing reference node of a group, while the one or more second wireless communication devices are each configured to serve as a non-timing reference node of the group.

In some embodiments, each of the first wireless communication device and the one or more second wireless communication devices is an anchor node. In some embodiments, the first wireless communication device serves as the timing reference node of the group, while the one or more second wireless communication devices each serve as the non-timing reference node of the group, and wherein the group is created by at least one of a Road Side Unit (RSU), a base station, or a positioning server.

Embodiments of a system, device and method for providing group-related information are disclosed. In some embodiments, a second wireless communication device sends, to a third wireless communication device via a sidelink communication, a message including first information and second information. In some embodiments, the second information is related to the second wireless communication device, and the first information is related to a first wireless communication device. In some embodiments, the first wireless communication device is configured to serve as a timing reference node of a group, while the second wireless communication devices is configured to serve as a non-timing reference node of the group.

Embodiments of a system, device and method for receiving group-related information are disclosed. In some embodiments, a third wireless communication device receives, from a second wireless communication device via a sidelink communication, a message including second information. In some embodiments, the second information is related to the second wireless communication device. In some embodiments, the second wireless communication devices is configured to serve as a non-timing reference node of a group, while a first wireless communication device is configured to serve as the timing reference node of the group.

The above and other aspects and their implementations are described in greater detail in the drawings, the descriptions, and the claims.

BRIEF DESCRIPTION OF THE DRAWINGS

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.

FIG. 1A illustrates an example wireless communication network, in accordance with an embodiment of the present disclosure.
FIG. 1B illustrates a block diagram of an example wireless communication system for transmitting and receiving downlink, uplink, and/or sidelink communication signals, in accordance with some embodiments of the present disclosure.
FIGS. 2-4 illustrate three types of node groups, in accordance with some embodiments of the present disclosure.
FIG. 5 illustrates a diagram of the group establishment information notified by the network node (or RSU), in accordance with some embodiments of the present disclosure.
FIG. 6 illustrates nodes belonging to a same group, in accordance with some embodiments of the present disclosure.
FIGS. 7-9 illustrate the TX time difference between the first node and the second node, in accordance with some embodiments of the present disclosure.
FIGS. 10-12 illustrate a way to obtain the air interface propagation delay, in accordance with some embodiments of the present disclosure.
FIGS. 13-14 illustrate a schematic diagram of the second node notifying the transmission timing difference between the second node and the first node, in accordance with some embodiments of the present disclosure.
FIG. 15 illustrates a schematic diagram of a third node obtaining its own positioning through positioning reference signal, in accordance with some embodiments of the present disclosure.
FIG. 16 illustrates a method of providing group-related information, in accordance with some embodiments.
FIG. 17 illustrates a method of providing group-related information, in accordance with some embodiments.
FIG. 18 illustrates a method of receiving a group-related information, in accordance with some embodiments.

DETAILED DESCRIPTION OF EXAMPLE EMBODIMENTS

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

**A. Network Environment and Computing Environment**

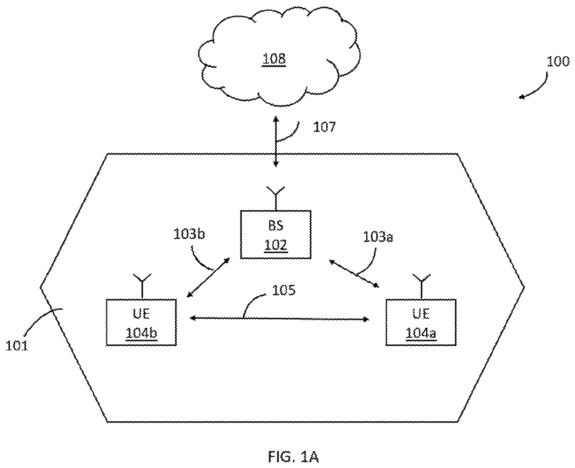

Referring to FIG. 1A, an example wireless communication network 100 is shown. The wireless communication network 100 illustrates a group communication within a cellular network. In a wireless communication system, a network side communication node or a base station (BS) can include a next Generation Node B (gNB), an E-utran Node B (also known as Evolved Node B, eNodeB or eNB), a pico station, a femto station, a Transmission/Reception Point (TRP), an Access Point (AP), or the like. A terminal side node or a user equipment (UE) can include a long range communication system such as, for example, a mobile device, a smart phone, a personal digital assistant (PDA), a tablet, a laptop computer, or a short range communication system such as, for example a wearable device, a vehicle with a vehicular communication system, or the like. In FIG. 1A, a network side and a terminal side communication node are represented by a BS 102 and a UE 104a or 104b, respectively, and in the embodiments in this disclosure hereafter. In some embodiments, the BS 102 and UE 104a/104b are sometimes referred to as "wireless communication node" and "wireless communication device," respectively. Such communication nodes/devices can perform wireless and/or wired communications.

In the illustrated embodiment of FIG. 1A, the BS 102 can define a cell 101 in which the UEs 104a-b are located. The UE 104a can include a vehicle that is moving within a coverage of the cell 101. The UE 104a can communicate with the BS 102 via a communication channel 103a. Similarly, the UE 104b can communicate with the BS 102 via a communication channel 103b. In addition, the UEs 104a-b can communicate with each other via a communication channel 105. The communication channels (e.g., 103a-b) between the UE and the BS can be through interfaces such as an Uu interface, which is also known as an air interface, which can include one or more of Universal Mobile Telecommunication System (UMTS) air interface, Evolved Universal Terrestrial Radio Access (E-UTRA) air interface, or New Radio (NR) air interface. The communication channels (e.g., 105) between the UEs can be through a PC5 interface, which is introduced to address high moving speed and high density applications such as, for example, Vehicle-to-Vehicle (V2V) communications, Vehicle-to-Pedestrian (V2P) communications, Vehicle-to-Infrastructure (V2I) communications, or the like. In some instances, such car network communications modes can be collective referred to as Vehicle-to-Everything (V2X) communications. It is appreciated that the communications channels between the UEs can be used in Device-to-Device (D2D) communications while remaining within the scope of the present disclosure. The BS 102 is connected to a core network (CN) 108 through an external interface 107, e.g., an Iu interface.

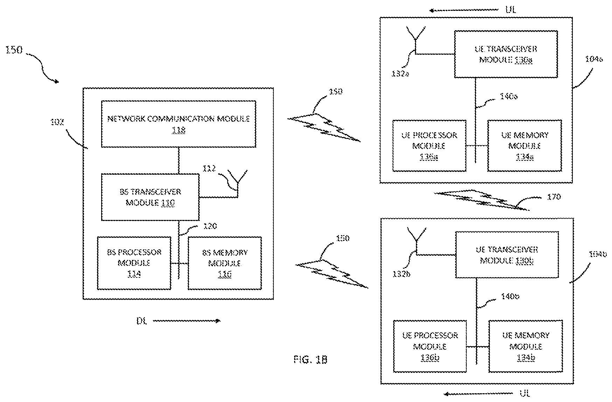

FIG. 1B illustrates a block diagram of an example wireless communication system 150 for transmitting and receiving downlink, uplink and sidelink communication signals, in accordance with some embodiments of the present disclosure. The system 150 may include components and elements configured to support known or conventional operating features that need not be described in detail herein. In one embodiment, the system 150 can transmit and receive data symbols in a wireless communication environment such as the wireless communication network 100 of FIG. 1A, as described above.

The system 150 generally includes the BS 102 and UEs 104a-b, as described in FIG. 1A. The BS 102 includes a BS transceiver module 110, a BS antenna 112, a BS memory module 116, a BS processor module 114, and a network communication module 118, each module being coupled and interconnected with one another as necessary via a data communication bus 120. The UE 104a includes a UE transceiver module 130a, a UE antenna 132a, a UE memory module 134a, and a UE processor module 136a, each module being coupled and interconnected with one another as necessary via a data communication bus 140a. Similarly, the UE 104b includes a UE transceiver module 130b, a UE antenna 132b, a UE memory module 134b, and a UE processor module 136b, each module being coupled and interconnected with one another as necessary via a data communication bus 140b. The BS 102 communicates with the UEs 104a-b via one or more of a communication channel 150, which can be any wireless channel or other medium known in the art suitable for transmission of data as described herein.

As would be understood by persons of ordinary skill in the art, the system 150 may further include any number of modules other than the modules shown in FIG. 1B. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software depends upon the particular application and design constraints imposed on the overall system. Those familiar with the concepts described herein may implement such functionality in a suitable manner for each particular application, but such implementation decisions should not be interpreted as limiting the scope of the present disclosure.

A wireless transmission from an antenna of one of the UEs 104a-b to an antenna of the BS 102 is known as an uplink transmission, and a wireless transmission from an antenna of the BS 102 to an antenna of one of the UEs 104a-b is known as a downlink transmission. In accordance with some embodiments, each of the UE transceiver modules 130a-b may be referred to herein as an uplink transceiver, or UE transceiver. The uplink transceiver can include a transmitter and receiver circuitry that are each coupled to the respective antenna 132a-b. A duplex switch may alternatively couple the uplink transmitter or receiver to the uplink antenna in time duplex fashion. Similarly, the BS transceiver module 110 may be herein referred to as a downlink transceiver, or BS transceiver. The downlink transceiver can include RF transmitter and receiver circuitry that are each coupled to the antenna 112. A downlink duplex switch may alternatively couple the downlink transmitter or receiver to the antenna 112 in time duplex fashion. The operations of the transceivers 110 and 130a-b are coordinated in time such that the uplink receiver is coupled to the antenna 132a-b for reception of transmissions over the wireless communication channel 150 at the same time that the downlink transmitter is coupled to the antenna 112. In some embodiments, the UEs 104a-b can use the UE transceivers 130a-b through the respective antennas 132a-b to communicate with the BS 102 via the wireless communication channel 150. The wireless communication channel 150 can be any wireless channel or other medium known in the art suitable for downlink (DL) and/or uplink (UL) transmission of data as described herein. The UEs 104a-b can communicate with each other via a wireless communication channel 170. The wireless communication channel 170 can be any wireless channel or other medium known in the art suitable for sidelink transmission of data as described herein.

Each of the UE transceiver 130a-b and the BS transceiver 110 are configured to communicate via the wireless data communication channel 150, and cooperate with a suitably configured antenna arrangement that can support a particular wireless communication protocol and modulation scheme. In some embodiments, the UE transceiver 130a-b and the BS transceiver 110 are configured to support industry standards such as the Long Term Evolution (LTE) and emerging 5G standards, or the like. It is understood, however, that the present disclosure is not necessarily limited in application to a particular standard and associated protocols. Rather, the UE transceiver 130a-b and the BS transceiver 110 may be configured to support alternate, or additional, wireless data communication protocols, including future standards or variations thereof.

The processor modules 136a-b and 114 may be each implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 114 and 136a-b, respectively, or in any practical combination thereof. The memory modules 116 and 134a-b may be realized as RAM memory, flash memory, ROM memory, EPROM memory, EEPROM memory, registers, a hard disk, a removable disk, a CD-ROM, or any other form of storage medium known in the art. In this regard, the memory modules 116 and 134a-b may be coupled to the processor modules 114 and 136a-b, respectively, such that the processors modules 114 and 136a-b can read information from, and write information to, memory modules 116 and 134a-b, respectively. The memory modules 116 and 134a-b may also be integrated into their respective processor modules 114 and 136a-b. In some embodiments, the memory modules 116 and 134a-b may each include a cache memory for storing temporary variables or other intermediate information during execution of instructions to be executed by processor modules 114 and 136a-b, respectively. Memory modules 116 and 134a-b may also each include non-volatile memory for storing instructions to be executed by the processor modules 114 and 136a-b, respectively.

The network interface 118 generally represents the hardware, software, firmware, processing logic, and/or other components of the BS 102 that enable bi-directional communication between BS transceiver 110 and other network components and communication nodes configured to communication with the BS 102. For example, the network interface 118 may be configured to support internet or WiMAX traffic. In a typical deployment, without limitation, the network interface 118 provides an 802.3 Ethernet interface such that BS transceiver 110 can communicate with a conventional Ethernet based computer network. In this manner, the network interface 118 may include a physical interface for connection to the computer network (e.g., Mobile Switching Center (MSC)). The terms "configured for" or "configured to" as used herein with respect to a specified operation or function refers to a device, component, circuit, structure, machine, signal, etc. that is physically constructed, programmed, formatted and/or arranged to perform the specified operation or function. The network interface 118 can allow the BS 102 to communicate with other BSs or core network over a wired or wireless connection.

In some embodiments, each of the UEs 104a-b can operate in a hybrid communication network in which the UE communicates with the BS 102, and with other UEs, e.g., between 104a and 104b. As described in further detail below, the UEs 104a-b support sidelink communications with other UE's as well as downlink/uplink communications between the BS 102 and the UEs 104a-b. In general, the sidelink communication allows the UEs 104a-b to establish a direct communication link with each other, or with other UEs from different cells, without requiring the BS 102 to relay data between UEs.

**B. Establishing Group of Communication Nodes and Obtaining Transmission Time Difference**

In some positioning technologies, such as OTDOA (Observed Time Difference of Arrival) positioning technology, the positioning reference signal transmission timing of the anchor node is required to be aligned before positioning can be performed. In fact, in these positioning technologies, even if the positioning reference signal transmission time of multiple anchor nodes cannot be guaranteed to be aligned, this type of positioning technology can still be used to realize the positioning of the node to be positioned as long as the transmission timing difference between each anchor node can be obtained.

However, in the existing sidelink technology, it is not only impossible to ensure that the transmission timing between the nodes is aligned, and the transmission timing difference between the nodes cannot be obtained.

Disclosed herein are embodiments of a system and method to obtain the transmission timing difference between anchor nodes. Some implementations obtain the transmission timing difference between anchor nodes belonging to the same node (e.g., the UE 104, the UE1, the UE2, a wireless communication device, a mobile device, a terminal) group. Disclosed herein are embodiments of a system and method for establishing the node group.

In some embodiments, multiple anchor nodes form a node group, and the anchor node components are timing reference nodes and non-timing reference nodes. In some embodiments, the transmission time difference between the non-timing reference node and the timing reference node is measured or calculated by the non-timing reference node. In some embodiments, the non-timing reference node either adjusts the transmission timing of the non-timing reference node or transmits the transmission time difference according to the measured or calculated transmission time difference.

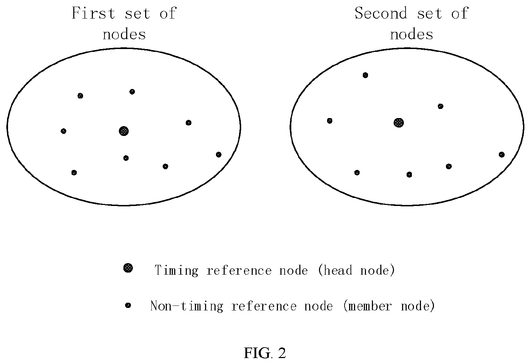

For a node group, it is a group of anchor nodes, and there is at least one timing reference node in the group of anchor nodes. FIGS. 2-4 illustrate three types of node groups, in accordance with some embodiments of the present disclosure. As shown in FIG. 2, when there is only one timing reference node in a node group, the timing reference node may be called the head node, and other nodes are called member nodes. The head node may also be called a timing reference node, and the member nodes may also be called a non-timing reference node.

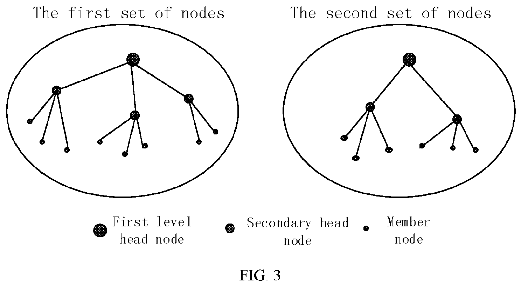

As shown in FIG. 3, a node group has a first-level head node, a number of second-level head nodes, and a number of member nodes. In some aspects, the first-level head node is a reference node for the transmission timing of the second-level head node. The transmission timing difference between the secondary head nodes can be different. Below each second-level head node, there may be several attribution member nodes, and the second-level head node is a reference node for the transmission timing of the member nodes.

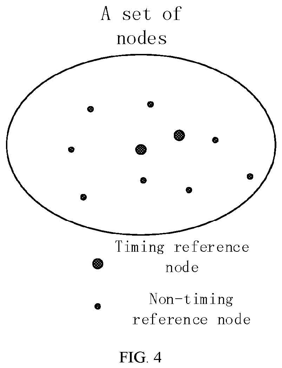

As shown in Fig. 4, when there are only one or more timing reference nodes in a node group, and the transmission timing of these timing reference nodes are aligned, for example, timing of these nodes are obtained through satellites. Other nodes in the node group may be called non-timing reference nodes.

The first node and the second node can be any of the following. In some embodiments, the first node is the first-level head node, and the second node is the second-level head node. In some embodiments, the second node of the first node is the second-level head node, and the second node is the member node. In some embodiments, the first node is the head node, and the second node is the member node. In some embodiments, the first node is a timing reference node, and the second node is a non-timing reference node.

In the case where the node group includes a head node and several member nodes, and the node to be located obtains the transmission timing difference between the member node and the head node, the positioning of the node to be located can be realized.

Similarly, when there are only one or more timing reference nodes in a node group, and the transmission timings of these timing reference nodes are aligned, the node to be positioned obtains the non-timing reference node in the node group. In the case of poor transmission timing, the positioning of the node to be located can be achieved.

For the case where the node group includes one first-level head node, several second-level head nodes, and several member nodes, if the node to be located obtains any one or two of the following, the positioning of the node to be located can be achieved.

In some embodiments, the transmission timing difference is the transmission time difference between a first-level head node and a second-level head node. In some embodiments, the transmission timing difference is the transmission timing difference between a second-level head node and a member node.

In a sidelink (e.g., Sidelink (SL)) communication system, when there are services to be transmitted between user equipment (UE, e.g., the UE 104, the UE1, the UE2, a wireless communication device, a mobile device, a terminal, a node), the services between UEs may not pass through the network side (e.g., the cellular link between the UE and the base station (BS, e.g., the BS 102, a wireless communication node, a Next Generation NodeB (gNB), an Evolved NodeB (eNB), a cell, a cell tower, a radio access device, a transmit receive point (TRP), a terminal, a node, etc.)). The services may be directly transmitted by the data source UE to the target UE via Sidelink. This direct communication mode between the (source) UE and the (target) UE can have characteristics that are significantly different from a communication mode of the traditional cellular system. Typical applications of Sidelink communication include device-to-device (D2D) communication and vehicle networking (e.g., Vehicle to Everything (V2X)) communication. V2X communications may include Vehicle to Vehicle (V2V), Vehicle to Pedestrian (V2P), and Vehicle to Infrastructure (V2I). For short-range communication users who can use Sidelink communication, Sidelink communication may save wireless spectrum resources and reduce the data transmission pressure of the core network, which can reduce system resource occupation, increase the spectrum efficiency of cellular communication systems, reduce communication delays, and save network operating costs.

In positioning, the communication node that needs to obtain its own geographic location may be referred to as the target node, and the target node may be referred to as the user equipment (e.g., UE, the UE 104, the UE1, the UE2, a mobile device, a terminal, a node, a wireless communication device). For the positioning of the target node, the help of other communication nodes may be needed to realize the positioning of the target node, and these other communication nodes may be referred to as anchor nodes. The anchor node can be a base station (BS, e.g., the BS 102, a wireless communication node, a Next Generation NodeB (gNB), an Evolved NodeB (eNB), a cell, a cell tower, a radio access device, a transmit receive point (TRP), etc.), terminal, satellite, or other equipment. In addition, it may be necessary to use a positioning reference signal to determine the positioning of the target node. The positioning reference signal here may refer to a reference signal used for positioning, and the communication node that sends the positioning reference signal may be a target node or an anchor node. The communication node that sends the positioning reference signal may be a base station, a terminal, a satellite, or other equipment.

Positioning can be divided into (e.g., categorized as) absolute positioning and relative positioning. In absolute positioning, the geographic location of several anchor nodes can be known, and the geographic location of the target node can be derived by measured positioning reference signals from several anchor nodes and the geographic location of several anchor nodes. For example, by measuring the positioning reference signals from several anchor nodes, the signal propagation delay between the target node and the anchor nodes can be further obtained, so as to further deduce the distance between the target node and the anchor nodes. In this example, according to the geographic locations of multiple anchor nodes and the distance between the target node and the multiple anchor node nodes, the geographic location of the target node can be calculated, that is, the location of the target node can be obtained.

In relative positioning, the geographic location of the anchor node may be known or unknown. Next, take the unknown geographic location of the anchor node as an example to illustrate the relative positioning. For example, the anchor node sends a positioning reference signal, and the target node measures the positioning reference signal sent by the anchor node. For example, by measuring the positioning reference signal, the target node obtains the distance between the anchor node and the target node, and obtains the distance between the anchor node and the target node and the angle of arrival. Based on the distance between the anchor node and the target node obtained by the target node and the arrival angle of the positioning reference signal, the relative positioning information of the target node relative to the anchor node can be obtained.

In 5G NR Uu positioning, the anchor node is the base station. In Sidelink positioning, the anchor node and the target node are both terminals. For the terminal, the corresponding physical entity may be a mobile phone, a tablet computer, RSU (Road Side Unit, Road Side Unit), OBU (On Board Unit, on-board unit), etc. In addition, the hybrid positioning technology including anchor terminals is also a positioning technology related to Sidelink positioning. In the hybrid positioning technology including anchor terminals, some anchor nodes are terminals, and the other part anchor nodes are other communication nodes, such as base stations and satellites. Disclosed herein are embodiments of a system and method not only suitable for Sidelink positioning, but also suitable for hybrid positioning technology including anchor terminals. Disclosed herein are embodiments of a system and method to establish a group of anchor nodes and to obtain the transmission timing difference between anchor nodes, and any anchor node in the group can be a base station, terminal, RSU, satellite, etc.

In some embodiments, a network node or RSU (Road Side Unit, Road Side Unit) is responsible for building a group. The network node can be a base station, a positioning server, etc. The location server is a node with a location management function, including but not limited to LMF (Location Management Function), E-SMLC (Enhanced Serving Mobile Location Centre), SLP (SUPL (secure user plane location) Location Platform), etc.

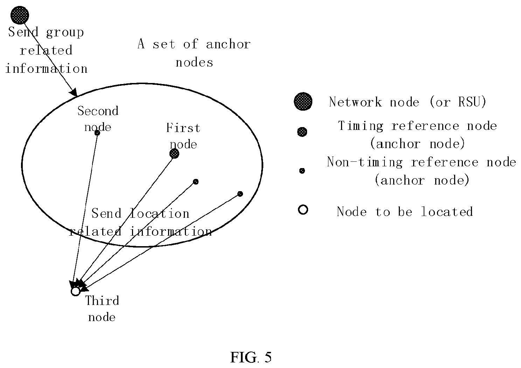

Figure 5 illustrates a diagram of the group establishment information notified by the network node (or RSU), in accordance with some embodiments of the present disclosure. The network node (or RSU) can notify one or more groups of group establishment information. In some embodiments, the group establishment information includes at least one of the following: a group number, a node identification of a timing reference node, and a node identification of several non-timed reference nodes. In some embodiments, the timing reference node is recorded as the head node, and the non-timed reference nodes are recorded as member nodes.

Alternatively, in some embodiments, the group establishment information includes at least the following: an identification of a timing reference node, and identification of one or more non-timed reference nodes. In some embodiments, the timing reference node is recorded as the head node, and the non-timed reference nodes are recorded as member nodes.

In some embodiments, the above-mentioned the identification of the timing reference node as the group identification. In the above description, the identification may include, but is not limited to, RNTI, Source/destination identification, PLMN identification, and RSU identification.

As shown in FIG. 2, multiple positioning anchor nodes form a group, and a group includes a head node and at least one member node. In some embodiments, when describing the information communication between the head node and the member nodes, the first node is used to mark the head node, and the second node is used to mark the member node.

In some embodiments, the head node is responsible for group building. In some implementations, as the first node, the head node notifies the following information: the identification of the first node, such as the source identification of the first node; and the identification of the head node, such as the source identification of the head node. In some aspects, the identification of the first node is equal to the identification of the head node.

In some embodiments, the first node notifies the following information: the identification of the first node; and whether the first node is the head node. In some embodiments, the node notifies the following information: the identification of the first node; the group identification; and whether the first node is the head node. In the foregoing descriptions, the identification of the first node may include, but is not limited to, RNTI, Source/destination identification, PLMN identification, and RSU identification.

In some aspects, the second node receives the information sent by the first node, and the information includes the identification of the first node and the identification of the head node. In some implementations, if the identification of the first node and the identification of the head node are equal, the second node determines that the first node is the head node of a node group. The node group may be identified by the identification of the head node.

In some embodiments, the information includes the identification of the first node and whether the first node is the head node. In some aspects, the information includes three pieces of information: the identification of the first node, the group identification, and whether the first node is the head node.

Through the above steps, the second node can determine whether the first node is the head node. In the following description, how the second node determines whether it is a member node in the node group where the head node is located.

In some implementations, the first node sends the identification of N>1 second nodes, and the N>1 second nodes are member nodes. In some embodiments, the head node and the member nodes are anchor nodes that belong to the same group. In some aspects, because the member node here is a positioning anchor node, the identification information of the N>1 second node sent by the first node belongs to positioning-related information.

In some embodiments, if the information received by the second node from the first node includes the identification of the second node, the second node determines that it is a member node in the node group where the head node is located.

In some embodiments, the second node determines whether the first node is the head node. After that, in some aspects, whether the second node joins the group where the head node is located is determined by the second node itself. In some implementations, if the second node joins the group where the head node is located, the second node is a member node of the group.

As shown in FIG. 3, multiple positioning anchor nodes form a group, and a group includes a first-level head node, at least one second-level head node, and at least one member node. In some embodiments, after a node discovers a first-level node, the node decides whether to join the node group where the first-level node is located, and decides whether to become a second-level node in the group. In some aspects, after a node discovers a secondary node, the node decides whether to join the node group where the secondary node is located, and decides whether to become a member node of the secondary node in the group.

In some embodiments, when the first-level head node is marked as the first node, and the second-level head node or member node is marked as the second node, the description of the first node and the second node side is as follows. In some aspects, as the first node, the first-level head node notifies the following information: the identification of the first node, such as the source identification of the first node; and the identification of the first-level head node, such as the source identification of the first-level head node. In some implementations, as the first node of the first-level head node, the notified identification of the first node and the identification of the first-level head node are equal.

In some aspects, the second node receives the information sent by the first node, and the information includes the identification of the first node and the identification of the first-level head node. In some embodiments, if the identification of the first node and the identification of the first-level head node are equal, the second node determines that the first node is the first-level head node of a node group. In some implementations, the node group is identified by the identification of the first-level head node.

In some aspects, when the secondary head node is marked as the first node and the member node is marked as the second node, the description of the first node and the second node side is as follows. In some embodiments, as the first node, the second-level head node notifies the following information: the identification of the first node, such as the source identification of the first node; the identification of the first-level head node, such as the source identification of the first-level head node; and the identification of the secondary head node, such as the source identification of the secondary head node. In some implementations, as the first node of the secondary head node, the notified identification of the first node and the identification of the secondary head node are equal.

In some embodiments, the second node receives the information sent by the first node, and the information includes the identification of the first node and the identification of the secondary head node. If the identification of the first node and the identification of the secondary head node are equal, the second node may determine that the first node is the secondary head node of a node group. In some aspects, the information received from the first node by the second node includes the identification of the first-level head node, and the second node identifies the first-level head node of the current node group accordingly. The second node can identify the node group through the identification of the first-level head node.

As shown in FIG. 4, multiple positioning anchor nodes form a group, and a group includes at least one timing reference node and at least one other node, and transmission timings between different timing reference nodes are aligned. The timing may refer to the transmission timing of the node and is used as a reference value for the transmission timing of other nodes. A node that obtains positioning by using satellite nodes may be the timing reference node.

In some embodiments, the node to be positioned is called a third node, and the surrounding one or more nodes obtaining positioning by using satellite nodes are used as timing reference nodes in the node group. In some embodiments, the anchor node of the surrounding one or more nodes obtaining positioning by using satellite nodes serves as the non-timing reference node in the node group.

The method for the non-timing reference node in the node group to find the timing reference node may be introduced as follows. In some embodiments, the first node is an anchor node and is a timing reference node. In some aspects, the first node sends information, and the sent information can be used by other nodes to identify whether the first node is a node obtaining positioning by using satellite nodes. In some implementations, the second node is an anchor node and a non-timing reference node. In some embodiments, the second node ,obtaining positioning by using anchor nodes which include at least one non satellite node, determines whether there are surrounding nodes that obtain positioning through satellite nodes by trying to receive information sent by the these nodes. In the above manner, the second node can find out whether there is a timing reference node around, e.g., it can find and identify surrounding nodes that obtain positioning through satellite nodes.

In some embodiments, the third node is a node that needs to be positioned, and the third node indicates a timing reference node and one or more non-timing reference nodes. The timing reference node and the one or more non-timing reference nodes may serve as positioning anchor nodes. In the relative positioning, the third node may obtain the location relative to one or more anchor nodes through the positioning reference signals sent by the timing reference node and/or the non-timing reference nodes. In the absolute positioning, the third node may calculate the position of the third node through both the positioning reference signals and location information from anchor nodes, and anchor nodes here include one or more timing reference nodes and/or non-timing reference nodes.

In some aspects, the third node is responsible for group building. In some embodiments, the third node sends the identification of the third node and the identification of the timing reference node. Among them, the identification of the timing reference node can be used to indicate which node is used as the timing reference node of the node group. In some embodiments, the third node is responsible for establishing a group, as shown in FIG. 4, for example.

In some embodiments, grouping is based on resource location. In some aspects, the positioning reference signals sent by multiple anchor nodes fall within the limited time domain, these nodes form a group. In some embodiments, the node (in the group of nodes) that first sends the positioning reference signal in the time domain serves as the timing reference node. In some aspects, if there are multiple nodes (in the group of nodes) that send the positioning reference signals earliest, the node with the smallest or largest source ID among the nodes that send the positioning reference signal earliest is used as the timing reference node, or the node with the smallest or largest positioning reference signal sequence identification among the nodes that sends the positioning reference signal earliest is used as the timing reference node. The timing reference node can be marked as the first node. The non-timing reference node can be marked as the second node.

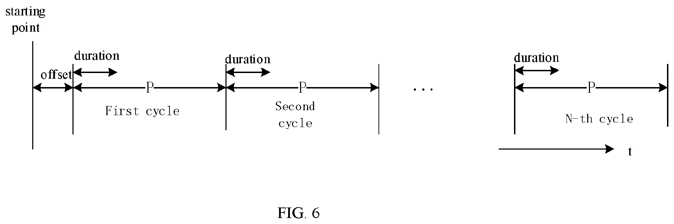

FIG. 6 illustrates nodes belonging to a same group, in accordance with some embodiments of the present disclosure. In FIG. 6, the time of the positioning reference signals sent by multiple anchor nodes fall within the limited time domain, and these nodes belong to the same group. In FIG. 6, there are multiple cycles, each of which has a length of P, and each cycle starts with a duration. Time interval between the beginning of the first cycle and the beginning of SFN0 (System Frame Number 0) can be represented by offset in FIG. 6.

The value of the period value P, offset, and duration can be configured through NAS layer signaling. The group can be established based on the resource location, for example, a node group as shown in FIG. 2.

In some aspects, the third node determines which anchor node are in a group based on the reference signal received power (RSRP) of the anchor nodes measured by it. In some implementations, the third node measures the RSRP of one or more anchor nodes by the reference signals sent by one or more anchor nodes. The anchor nodes, whose RSRP thresholds are not less than a RSRP threshold, are determined as a group by the third node. The RSRP threshold can be configured or pre-configured through non-access stratum (NAS) signaling.

In some implementations, the third node determines which anchor nodes are in a group based on the received signal strength indicator (RSSI) of the anchor nodes. In some aspects, the third node measures the RSSI of one or more anchor nodes by receiving signals or information sent by one or more anchor nodes. The anchor nodes, whose RSSI thresholds are not less than a RSSI threshold, are determined as a group by the third node. The RSSI threshold can be configured or pre-configured through non-access stratum (NAS) signaling.

In some embodiments, the third node sends the identification of the timing reference node. Among them, the identification of the timing reference node can be used to indicate which node is used as the timing reference node of the node group. The timing reference node can be marked as the first node. In some aspects, the third node is responsible for establishing a group, for example, a node group as shown in FIG. 2.

In some embodiments, based on the distance between the second node and the head node, the second node determines whether to join the node group where the head node is located, and becomes a member node of the corresponding group. In some implementations, if the distance between the second node and a head node does not exceed a distance threshold, the second node determine to be a member node of the node group where the head node is located. The distance threshold can be configured or pre-configured through NAS signaling.

In some embodiments, the second node determines whether to join the node group where the head node belongs based on the measured RSRP from the head node, and becomes a member node of the group including the head node. In some implementations, the second node measures the RSRP from a head node by receiving a reference signal sent by the head node. If the measured RSRP from the head node does not exceed the RSRP threshold, the second node determine to become a member node of the node group where the head node is located. The RSRP threshold can be configured or pre-configured through NAS signaling.

In some embodiments, the second node determines whether to join the node group where the head node belongs based on the measured RSSI of the head node, and becomes a member node of the group including the head node. In some implementations, the second node measures the RSSI from a head node by receiving a signal or information sent by the head node. In some implementations, if the RSSI of the head node measured by the second node does not exceed the RSSI threshold, the second node determine to become a member node of the node group where the head node is located. The RSSI threshold can be configured or pre-configured through NAS signaling.

The first node and the second node in the following description can be any of the following. In some embodiments, the first node is the first-level head node, and the second node is the second-level head node. In some embodiments, the first node is the second-level head node, and the second node is the member node. In some embodiments, the first node is the head node, and the second node is the member node. In some embodiments, the first node is a timing reference node, and the second node is a non-timing reference node;

In some aspects, the first node is a first-level head node, and the second node is a second-level head node. This may mean that multiple positioning anchor nodes form a group, and a group includes one first-level head node, at least one second-level head node, and at least one member node. In some aspects, when describing the information communication between the first-level head node and the second-level head node, the first node is used to mark the first-level head node, and the second node is used to mark the second-level head node.

In some implementations, the first node is a second-level head node, and the second node is a member node. That may mean that multiple positioning anchor nodes form a group, and a group includes one first-level head node, at least one second-level head node, and at least one member node. In some aspects, when describing the information communication between the second-level head node and the member nodes, the first node is used to mark the second-level head node, and the second node is used to mark the member node.

In some embodiments, the first node is the head node and the second node is the member node. This may mean that multiple positioning anchor nodes form a group, and a group includes a head node and at least one member node. In some aspects, when describing the information communication between the head node and the member nodes, the first node is used to mark the head node, and the second node is used to mark the member node.

In some implementations, the first node is a timing reference node, and the second node is a non-timing reference node. This may mean that multiple positioning anchor nodes form a group, and a group includes one timing reference node and at least one other node, and the first node is the timing reference node.

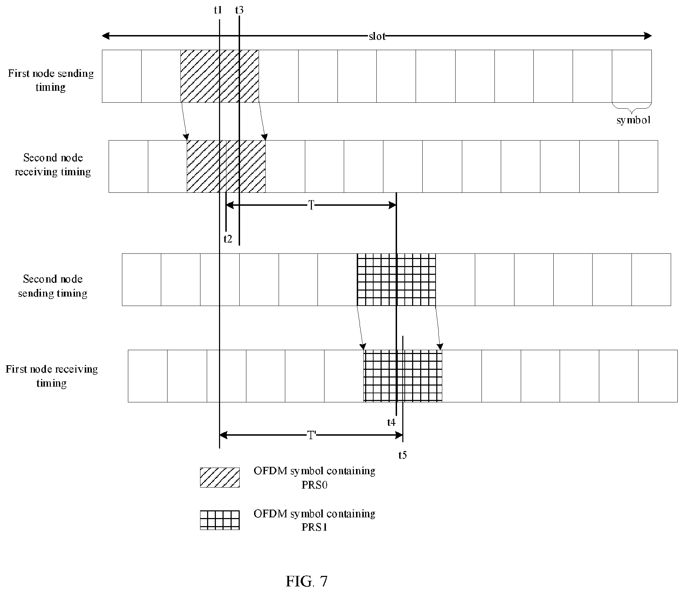

FIG. 7 illustrates the TX time difference between the first node and the second node, in accordance with some embodiments of the present disclosure. In FIG. 7, the time difference of the transmission timing between the first node and the second node may be 0.5 OFDM symbols. The air interface transmission delay τ between the first node and the second node may be 1/6 OFDM symbols. In FIG. 7, the first node sends PRSO, and the symbol positions of the PRSO sent by it are OFDM symbol 2 and OFDM symbol 3 in one slot. The time t1 at which the first node sends the PRSO can be represented by the time at which the first node sends the PRSO, such as the left boundary, the right boundary, and the middle position. In FIG. 7, the middle position when the first node sends the PRSO is used to characterize the time t1 when the first node sends the PRSO.

In some embodiments, due to the transmission delay, the PRSO received by the second node is delayed by 1/6 OFDM symbols from the PRSO sent by the first node. The time t2 when the second node receives the PRSO can be represented by the time of the left boundary, the right boundary, and the middle position of the PRSO received by the second node. In FIG. 7, the time t2 when the second node receives the PRSO is represented by the time corresponding to the middle position of the PRSO received by the second node.

In some embodiments, the second node sends PRS1, and the symbol positions of the sent PRS1 in one slot are OFDM symbol 6 and OFDM symbol 7. In some aspects, the transmission timing of the second node is different from the transmission timing of the first node, and the transmission timing of the second node is 0.5 OFDM symbol later than the transmission timing of the first node. Therefore, in FIG. 7, the slot boundary of the second node sending PRS1 is 0.5 OFDM symbols later than the slot boundary of the first node sending PRSO. The time t4 when the second node sends the PRS1 can be represented by the time at which the second node sends the PRS1, such as the left boundary, the right boundary, and the middle position. In FIG. 7, the time t4 when the second node sends PRS1 is represented by the middle position when the second node sends PRS1.

In some embodiments, due to the transmission delay, the PRS1 received by the first node is delayed by 1/6 OFDM symbols relative to the PRS1 sent by the second node. The time t5 when the first node receives the PRS1 can be characterized by the time of the left boundary, the right boundary, and the middle position of the PRS1 received by the first node. In FIG. 7, the time t5 when the first node receives the PRS1 is represented by the time corresponding to the middle position of the PRS1 received by the first node.

The OFDM symbol number/position used by the first node to send PRSO may be a fixed symbol number/position in a slot. Alternatively, the first node may inform the second node of the OFDM symbol number/position of sending PRSO in the slot through the sidelink control information (SCI). As shown in FIG. 7, the OFDM symbol number/position used by the first node to send PRSO is OFDM symbol 2 or OFDM symbol 3.

In some embodiments, the second node calculates the transmission time difference between the second node and the first node based on the OFDM symbol number/location used by the first node to transmit the PRSO and the transmission timing of the second node. In some implementations, the slot boundary and the OFDM symbol boundary corresponding to the transmission timing of the second node are shown in the third row of FIG. 7. In some aspects, the second node determines the time t3 according to its transmission timing and the OFDM symbol number/location used by the first node to transmit the PRSO.

The OFDM symbol positions of sending PRSO by the first node are 2 and 3, so the second node finds the transmission timing of the second node on OFDM symbol 2 and OFDM symbol 3. The transmission timing of the second node on OFDM symbol 2 and OFDM symbol 3 can be characterized by the time of the left boundary, the right boundary, and the middle position of the OFDM symbol 2 and OFDM symbol 3. In Fig. 7, the time corresponding to OFDM symbol 2 and OFDM symbol 3 is represented by the middle position of the OFDM symbol 2 and OFDM symbol 3. Thus, according to the transmission timing of the second node on OFDM symbol 2 and OFDM symbol 3, the determined time t3 is shown in Fig. 7. The second node calculates the transmission time difference Δt between the second node and the first node based on the following formula.

$$\Delta t = t3 - t2 + \tau$$

In FIG. 7, the air interface transmission delay $\tau$ between the first node and the second node corresponds to t2-t1, and also corresponds to t5-t4. It can be seen from FIG. 7 that Δt=t3-t2+$\tau$=t3-t1. In FIG. 7, t3 is on the right of t2.

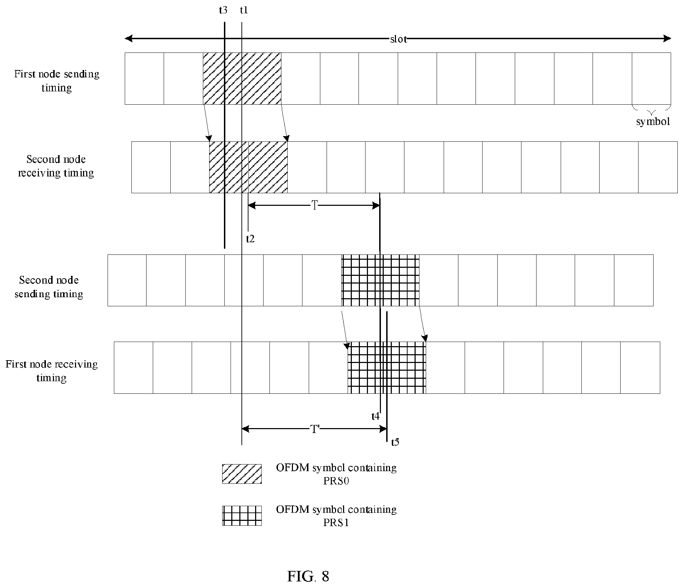

FIG. 8 illustrates the TX time difference between the second node and the first node, in accordance with some embodiments of the present disclosure. FIG. 8 is similar to FIG. 7 except that, in FIG. 8, t3 is on the left of t1. At this time, Δt = - (t2-t3- $\tau$).

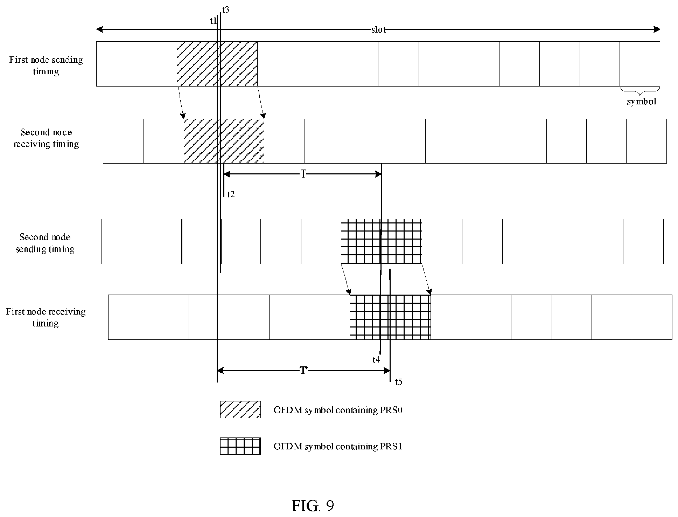

FIG. 9 illustrates the TX time difference between the second node and the first node, in accordance with some embodiments of the present disclosure. FIG. 9 is similar to FIG. 7 except that, in FIG. 9, t3 is on the right of t1 and on the left of t2. At this time, Δt = $\tau$ - (t2-t3).

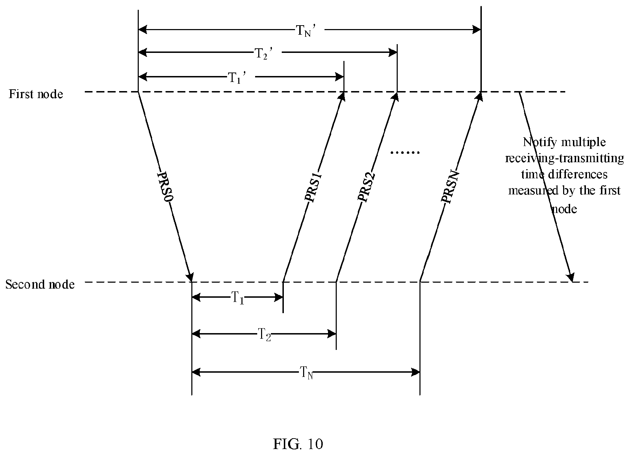

In some embodiments, the method for acquiring the propagation delay of the air interface is introduced. FIG. 10 illustrates a way to obtain the air interface propagation delay, in accordance with some embodiments of the present disclosure. In some embodiments, the first node sends the positioning reference signal, and indicate through the SCI at least one second node to send the positioning reference signal.

In some aspects, the first node measures receiving-transmitting time difference between it and each second node, and the measured receiving-transmitting time difference between the first node and the i-th second node is marked as $T_i'$. The $T_i'$ is the time difference between the second time and the first time. Here, the first time is the time when the first node sends the PRSO, ant the second time is the time when the first node receives the PRSi, where the PRSi is sent by the second node i. In some implementations, the first node informs the receiving-transmitting time difference $T_i'$.

In some embodiments, any i-th second node can receive the receiving-transmitting time difference $T_i'$ notified by the first node. In some aspects, the i-th second node also measures the time difference between transmission and reception. In some implementations, the difference between the sending and receiving time measured by the i-th second node is marked as $T_i$. In some embodiments, the $T_i$ is the time difference between the fourth time and the third time. Here, the third time is the time when the second node i receives the PRSO sent by the first node, and the fourth time is the time when the second node sends PRSi. In some embodiments, the i-th second node calculates the positioning reference signal propagation delay $\tau_i$, between it and the first node, $\tau_i = \frac{T_i' - T_i}{2}$.

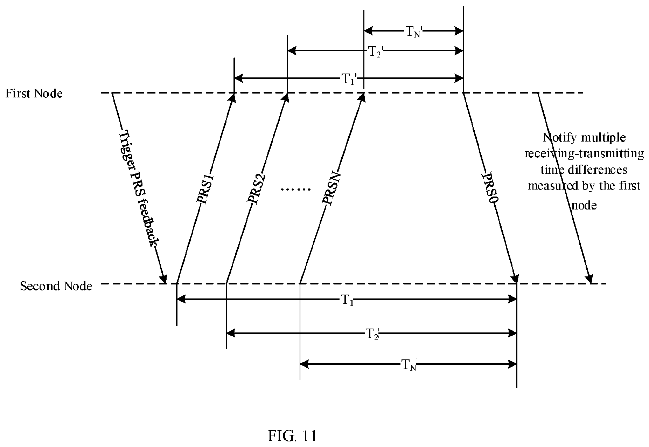

FIG. 11 illustrates a way to obtain the air interface propagation delay, in accordance with some embodiments of the present disclosure. In some embodiments, the first node indicate through the SCI at least one second node to send the positioning reference signal. In some aspects, the first node sends the positioning reference signal.

The first node measures the receiving-transmitting time difference between it and each second node, and the measured the receiving-transmitting time difference is marked as $T_i'$. The $T_i'$ is the time difference between the second time and the first time. Here, the first time is the time when the first node receives the PRSi sent by the second node i, and the second time is the time when the first node sends the PRSO. The first node notify the receiving-transmitting time difference $T_i'$ between it and each second node i.

Any i-th second node can receive the receiving-transmitting time difference $T_i'$ notified by the first node. In some embodiments, the i-th second node also measures the time difference between transmission and reception. The difference between the sending and receiving measured by the i-th second node can be marked as $T_i$. In some embodiments, the $T_i$ is the time difference the fourth time and the third time. Here, the third time is the time when the i-th sencond node sends the PRSi, and the fourth time is the time when the i-th second node receives the PRSO sent by the first node. The i-th second node calculates the positioning reference signal propagation delay $\tau_i$ between it and the first node, $\tau_i = \frac{T_i - T_i'}{2}$.

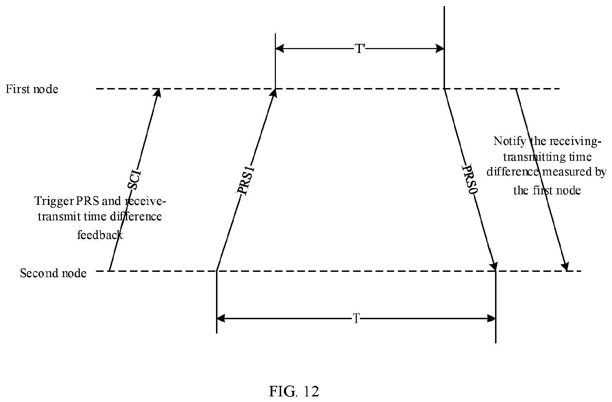

FIG. 12 illustrates a way to obtain the air interface propagation delay, in accordance with some embodiments of the present disclosure. In some embodiments, the second node sends the SCI. In some embodiments, the SCI contains an indication of the resource location of the positioning reference signal sent by the second node, and the SCI contains information that is used to trigger the first node to feed back the positioning reference signal and trigger the first node to feed back the time difference between receiving and sending. In some embodiments, the second node sends a positioning reference signal, which is PRS1 in FIG. 12.

In some embodiments, the first node measures the receiving-transmitting time difference $T'$ between it and the second node. In some embodiments, the $T'$ is the time difference between the time when the first node send the positioning reference signal and the time when the first node receive the positioning reference signal from the second node.
In some embodiments, the time when the first node sends the positioning reference signal is indicated by the second node through the SCI, or the first node determines the time when the first node sends the positioning reference signal by itself. In some embodiments, the first node sends a positioning reference signal, which is PRSO in FIG. 12.

In some embodiments, the first node informs the receiving-transmitting time difference $T'$ between it and the second node through a message. In addition to $T'$, this message can also contain receiving-transmitting time difference between the first node and other nodes.

In some embodiments, the second node measures the time difference between sending and receiving. In some embodiments, the difference between the sending and receiving measured on the second node is marked as T. In some embodiments, the T is the time difference between the time when the second node receive the positioning reference signal from the first node and the time when the second node send the positioning reference signal In some embodiments, the second node calculates the positioning reference signal propagation delay $\tau$ between it and the first node, $\tau = \frac{T - T'}{2}$

In some embodiments, one way to obtain the air interface propagation delay is to calculate the positioning reference signal propagation delay $\tau$ between the second node and the first node based on the geographic locations of the first node and the second node. In some embodiments, based on the geographic locations of the first node and the second node, the second node calculates the distance d between it and the first node, and according to $\tau$=d/C, the second node calculates propagation delay $\tau$ between it and the first node. Among them, C is the speed of light.

The foregoing introduces several ways to obtain the air interface propagation delay. For some of the above several, the time difference between receiving and transmitting measured by the first node is notified to at least one second node by the first node. The manner in which the first node notifies at least one second node of the receiving-transmitting time difference may be the following manner. In some embodiments, the first node notifies the node identification (for example, the source identification) of at least one second node, and notifies the receiving-transmitting time difference corresponding to each node identification. The receiving-sending time difference can be notified in the form of an index value, and there is a mapping relationship between the index value and the range of the receiving-sending time difference.

The transmission timing difference between the second node and the first node is denoted by $\Delta t$. For example, in FIG. 7, $\Delta t$=t3-t1=t3-t2+$\tau$, in FIG. 8 $\Delta t$=t3-t1=-(t2-t3-$\tau$)=t3-t2+$\tau$, and in FIG. 9 $\Delta t$=t3-t1=$\tau$-(t2-t3)=t3-t2+$\tau$.

Based on the transmission timing difference $\Delta t$ between the second node and the first node, a processing method of the second node is as follows. In some aspects, the second node adjusts the transmission timing by $\Delta t$ on the basis of the original transmission timing. As described above, $\Delta t$ can be used to mark the transmission timing difference between the second node and the first node. In some implementations, if the value of $\Delta t$ is positive, the second node adjusts the transmission timing to be advanced by $\Delta t$ based on the original transmission timing. In some aspects, if the value of $\Delta t$ is negative, the second node adjusts the transmission timing to be delayed by $\Delta t$ based on the original transmission timing.

In FIG. 7, the original transmission timing of the second node is the third row in FIG. 7. In some embodiments, after the second node adjusts the transmission timing by $\Delta t$ on the basis of the original transmission timing, the slot boundary and symbol boundary time used for information transmission in the third row in FIG. 7 are advanced by $\Delta t$ (the value of $\Delta t$ in FIG. 7 is positive). In some aspects, the second node sends the positioning reference signal is at the time t4 in FIG. 7 if the unadjusted original transmission timing is adopted and after the adjusted transmission timing, the second node sends the positioning reference signal at the time t4-$\Delta t$.

In some embodiments, FIG. 8 is similar to FIG. 7 except that, in FIG. 8, after the adjusted transmission timing, the time at which the second node sends the positioning reference signal is t4+$\Delta t$. In some aspects, characterized by t4+$\Delta t$, the

positioning reference signal transmission time corresponding to the second node according to the original transmission timing is t4, and the positioning reference signal transmission time after the adjustment of the transmission timing is t4 is delayed by $\Delta$t.

In some implementations, the third node receives the positioning reference signal sent by the first node and the multiple second nodes, and the third node receives the geographic information sent by the first node and the multiple second nodes. In some embodiments, the third node calculates its own positioning position based on this information.

In some implementations, the third node receives positioning reference signal sent by multiple second nodes, and the third node receives geographic information sent by multiple second nodes. In some aspects, the third node calculates its own positioning position based on this information.

In some implementations, based on the transmission timing difference $\Delta$t between the second node and the first node, another processing method of the second node is as follows. In some embodiments, the second node still sends the positioning reference signal according to the original transmission timing. The second node informs that the transmission timing difference $\Delta$t between the second node and the first node. In some aspects, the second node notifies the transmission timing difference between the second node and the first node.

In some implementations, the way for the second node to notify the transmission timing difference $\Delta$t between the second node and the first node is as follows. In some embodiments, the second node sends SCI or NAS signaling. The number of time units contained in the SCI or NAS signaling can be marked as N. In some aspects, the second node uses SCI or NAS signaling, and the SCI or NAS signaling contains the number of orthogonal frequency-division multiplexing (OFDM) symbols. In some implementations, the second node uses SCI or NAS signaling, and the SCI or NAS signaling contains the number of time slots.

In some implementations, the manner in which the second node notifies the transmission timing difference $\Delta$t between the second node and the first node is as follows. In some embodiments, the second node sends SCI or NAS signaling. The number of time units contained in the SCI or NAS signaling can be marked as N. In some aspects, the second node uses SCI or NAS signaling, and the SCI or NAS signaling contains the number of OFDM symbols.

In some implementations, the manner in which the second node notifies the transmission timing difference $\Delta$t between the second node and the first node is as follows. In some embodiments, the second node uses SCI or NAS signaling, and the SCI or NAS signaling contains the number of OFDM symbols.

Among the above-mentioned ways of notifying the transmission timing difference $\Delta$t between the second node and the first node, the time unit may correspond to the time length or time range configured by NAS layer signaling, or the time unit may correspond to the time length or time range pre-configured. In some embodiments, one way is to indicate the number of time units through SCI or NAS signaling. In some aspects, one way is to directly indicate the number N of time units. In some embodiments, another way is to establish a mapping relationship between the value indicated in the SCI or NAS signaling and the number of time units (or the value range of the number of time units). In some aspects, the value indicated in the SCI or NAS signaling indicates the number of time units (or the value range of the number of time units). An example of the mapping relationship between the value indicated in the SCI or NAS signaling and the number of time units is shown in Table 1, which illustrates the mapping relationship between the value indicated in the SCI or NAS signaling and the range of the number of time units. In the Table 1, the length of the time unit is predetermined, and the length of the time unit is $T_c$, $T_c = 1/(\Delta f_{max} \cdot N_f)$ where $\Delta f_{max} = 480 \cdot 10^3$ Hz and $N_f = 4096$.

Table 1

| Value indicated in SCI or NAS signaling | Range of number of time units N | Time unit length |
|---|---|---|
| 0000000 | N < -985024 | $T_c$ |
| 0000001 | $-985024 \leq N < -985023$ | $T_c$ |
| 0000002 | $-985023 \leq N < -985022$ | $T_c$ |
| ... | ... | ... |
| 0985024 | $-1 \leq N < 0$ | $T_c$ |
| 0985025 | $0 \leq N < 1$ | $T_c$ |
| ... | ... | ... |
| 1970047 | $985022 \leq N < 985023$ | $T_c$ |
| 1970048 | $985023 \leq N < 985024$ | $T_c$ |
| 1970049 | $985024 \leq N$ | $T_c$ |

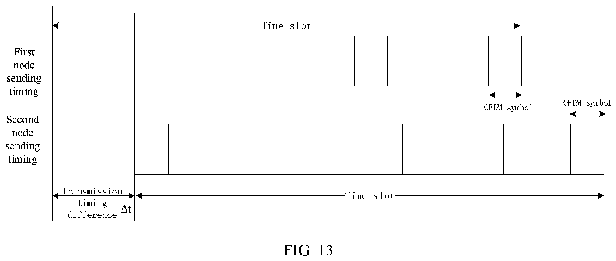

FIG. 13 illustrates a schematic diagram of the second node notifying the transmission timing difference $\Delta$t

between the second node and the first node, in accordance with some embodiments of the present disclosure. Corresponding to Fig. 13, the manner in which the second node notifies the transmission timing difference Δt between the second node and the first node is as follows. In some embodiments, the second node sends SCI or NAS signaling. In some embodiments, the number of time units contained in the SCI or NAS signaling is marked as N. In some embodiments, the second node uses SCI or NAS signaling, and the SCI or NAS signaling contains the number of OFDM symbols.

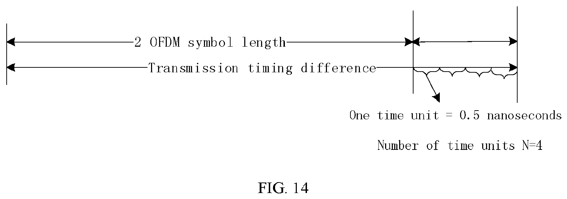

FIG. 14 illustrates a schematic diagram of the second node notifying the transmission timing difference between the second node and the first node, in accordance with some embodiments of the present disclosure. In some embodiments, the third node receives the positioning reference signal sent by the first node and the multiple second nodes, the third node receives the geographic information sent by the first node and the multiple second nodes, and the third node receives transmission timing difference between the second node and the first node sent by the second node. In some embodiments, the third node calculates its own positioning position based on this information.

In some embodiments, the third node receives positioning reference signal sent by multiple second nodes, and the third node receives geographic information sent by multiple second nodes, and the third node receives transmission timing difference between the second node and the first node sent by the second node. In some embodiments, the third node calculates its own positioning position based on this information.

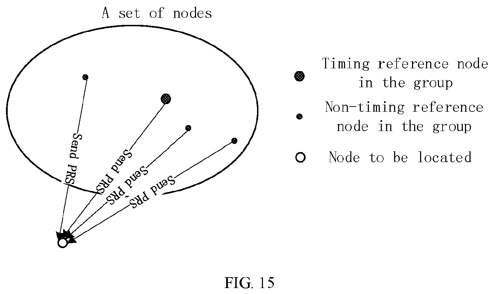

FIG. 15 illustrates a schematic diagram of a third node obtaining its own positioning through positioning reference signal, in accordance with some embodiments of the present disclosure. In FIG. 15, a group of anchor nodes includes a timing reference node and several non-timing reference nodes. In some embodiments, the timing reference node is marked as a head node, and the non-timing reference node is marked as a member node.

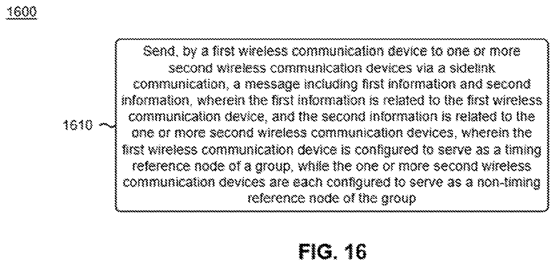

FIG. 16 illustrates a method 1600 of providing group-related information, in accordance with some embodiments. Referring to FIGS. 1-15, the method 1600 can be performed by a (first) wireless communication device (e.g., a UE) and/or a wireless communication node (e.g., base station, a gNB), in some embodiments. Additional, fewer, or different operations may be performed in the method 1600 depending on the embodiment.

In some embodiments, a first wireless communication device sends, to one or more second communication devices via a sidelink communication, a message including first information and second information (block 1610). In some embodiments, the first information is related to the first wireless communication device, and the second information is related to the one or more second wireless communication devices. In some embodiments, the first wireless communication device is configured to serve as a timing reference node of a group, while the one or more second wireless communication devices are each configured to serve as a non-timing reference node of the group.

In some embodiments, each of the first wireless communication device and the one or more second wireless communication devices is an anchor node. In some embodiments, the first wireless communication device serves as the timing reference node of the group, while the one or more second wireless communication devices each serve as the non-timing reference node of the group, and wherein the group is created by at least one of a Road Side Unit (RSU), a base station, or a positioning server.

In some embodiments, method 1600 includes creating, by the first wireless communication device, the group to include the one or more second wireless communication devices, wherein the first wireless communication device serves as the timing reference node of the group, while the one or more second wireless communication devices each serve as the non-timing reference node of the group.

In some embodiments, the message further includes third information. In some embodiments, the first information includes a first identification of the first wireless communication device and whether the first wireless communication device is the timing reference node of the group, and the third information includes a second identification of the group. In some embodiments, the first information includes a first identification of the first wireless communication device and whether the first wireless communication device is the timing reference node of the group.

In some embodiments, the first wireless communication device serves as the timing reference node of the group, while the one or more second wireless communication devices each serve as the non-timing reference node of the group. In some embodiments, the group further includes at least another first wireless communication device that is also configured to serve as the timing reference node of the group, respective transmission timings of those first wireless communication devices being aligned with each other. In some embodiments, timings of the first and one or more second wireless communication devices transmitting respective positioning reference signals are within a time duration.

In some embodiments, the first wireless communication device transmits the positioning reference signal earlier than any of the one or more second wireless communication devices, and serves as the timing reference node of the group, while the one or more second wireless communication devices each serve as the non-timing reference node of the group.

In some embodiments, the first wireless communication device serves as the timing reference node of the group, while the one or more second wireless communication devices each serve as the non-timing reference node of the group. In some embodiments, a distance difference value between a first location of the first wireless communication device and a second location of each of the one or more second wireless communication devices is not greater a first threshold, a Reference Signal Received Power (RSRP) value measured by the second wireless communication device on a reference signal sent by the first wireless communication device is not greater than a second threshold, or a Received Signal Strength Indicator (RSSI) value measured by the second wireless communication device on a signal sent by the first wireless communication device is not greater than a third threshold.

In some embodiments, method 1600 includes triggering, by the first wireless communication device, one or more the second wireless communication devices to send positioning reference signals.

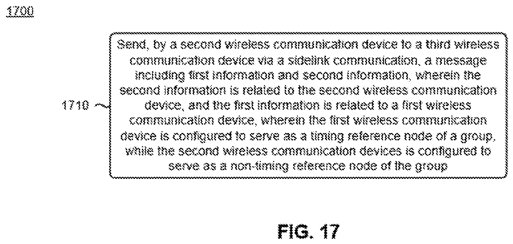

FIG. 17 illustrates a method 1700 of providing group-related information, in accordance with some embodiments. Referring to FIGS. 1-15, the method 1700 can be performed by a (second) wireless communication device (e.g., a UE) and/or a wireless communication node (e.g., base station, a gNB), in some embodiments. Additional, fewer, or different operations may be performed in the method 1700 depending on the embodiment.

In some embodiments, a second wireless communication device sends, to a third wireless communication device via a sidelink communication, a message including first information and second information (block 1710). In some embodiments, the second information is related to the second wireless communication device, and the first information is related to a first wireless communication device. In some embodiments, the first wireless communication device is configured to serve as a timing reference node of a group, while the second wireless communication devices is configured to serve as a non-timing reference node of the group. In some embodiments, the second wireless communication sends, to a plurality of third wireless communication devices via the sidelink communication, the message including first information and second information. In some embodiments, the second wireless communication sends, to the first wireless communication devices via the sidelink communication, the message including first information and second information.

In some embodiments, the message further includes third information. In some embodiments, the second information includes a third identification of the second wireless communication device and whether the second wireless communication device is the timing reference node of the group, and the third information includes a second identification of the group. In some embodiments, the second information includes a third identification of the second wireless communication device and whether the second wireless communication device is the timing reference node of the group.

In some embodiments, the message further includes third information. In some embodiments, the second information includes a third identification of the second wireless communication device, and the third information includes a second identification of the timing reference node, and wherein the third identification is not identical to the second identification.

In some embodiments, the first wireless communication device serves as the timing reference node of the group, while the second wireless communication devices serves as the non-timing reference node of the group. In some embodiments, the group is created by at least one of a Road Side Unit (RSU), a base station, or a positioning server.

In some embodiments, the first wireless communication device serves as the timing reference node of the group, while the second wireless communication device serves as the non-timing reference node of the group. In some embodiments, the method 1700 further includes providing group-related information between a first transmission timing of the first wireless communication device and a second transmission timing of the second wireless communication device at least based on the second transmission timing, and a propagation delay between the first wireless communication device and the second wireless communication device. In some embodiments, the second wireless communication node notifies a third wireless communication node of the timing difference.

In some embodiments, the first wireless communication device serves as the timing reference node of the group, while the second wireless communication device serves as the non-timing reference node of the group. In some embodiments, the method 1700 further includes determining a timing difference between a first transmission timing of the first wireless communication device and a second transmission timing of the second wireless communication device at least based on locations of one or more symbols that the first wireless communication device transmits a positioning reference signal, the second transmission timing, and a propagation delay between the first wireless communication device and the second wireless communication device.

In some embodiments, the first information includes a timing difference between a first transmission timing of the first wireless communication device and a second transmission timing of the second wireless communication device. In some embodiments, method 1700 includes adjusting, by the second wireless communication device, based on the timing difference, the second transmission timing. In some embodiments, after adjusting the transmission timing, there is no transmission time difference between the second node and the first node, that is, the transmission timing between the second node and the first node is aligned.

In some embodiments, method 1700 includes informing, by the second wireless communication device, the timing difference through at least one of a first Sidelink Control Information (SCI) message or first Non-Access Stratum (NAS) message including a number of time units, a second SCI message or second NAS message including a number of symbols, or a third SCI message or third NAS message including a number of slots.

In some embodiments, method 1700 includes triggering, by the second wireless communication device, the first wireless communication devices to send positioning reference signals. In some embodiments, method 1700 includes triggering, by the second wireless communication device, the first wireless communication devices to send a transmission-reception timing difference associated with the second wireless communication device. In some embodiments, the second wireless communication device triggers the first wireless communication device to feedback PRS and receive-transmit time by indicating the identification of the first wireless communication device.

In some embodiments, method 1700 includes estimating, by the second wireless communication device, a propagation delay between the first wireless communication device and the second wireless communication devices based on the second information and a first transmission-reception timing difference associated with the second wireless communication device, wherein the second information includes an a second transmission-reception timing difference associated with the first wireless communication device.

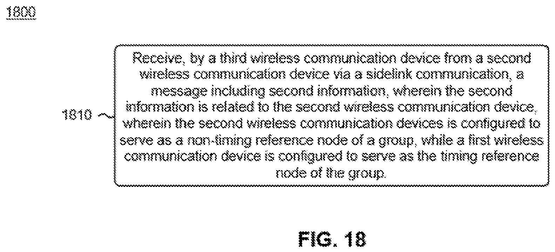

FIG. 18 illustrates a method 1800 of receiving group-related information, in accordance with some embodiments. Referring to FIGS. 1-15, the method 1800 can be performed by a (third) wireless communication device (e.g., a UE) and/or a wireless communication node (e.g., base station, a gNB), in some embodiments. Additional, fewer, or different operations may be performed in the method 1800 depending on the embodiment.

In some embodiments, a third wireless communication device receives, from a second wireless communication device via a sidelink communication, a message including second information (block 1810). In some embodiments, the second information is related to the second wireless communication device. In some embodiments, the second wireless communication devices is configured to serve as a non-timing reference node of a group, while a first wireless communication device is configured to serve as the timing reference node of the group.

In some embodiments, method 1800 includes receiving, by the third wireless communication device from the second wireless communication device, a difference between a first transmission timing of the first wireless communication device and a second transmission timing of the second wireless communication devices through at least one of a first Sidelink Control Information (SCI) message or first Non-Access Stratum (NAS) message including a number of time units, a second SCI message or second NAS message including a number of symbols, or a third SCI message or third NAS message including a number of slots.

In some embodiments, method 1800 includes determining, by the third wireless communication device, the group by determining that timings of the first and the second wireless communication devices transmitting respective positioning reference signals are within a time duration.

In some embodiments, method 1800 includes determining, by the third wireless communication device, the group by determining that a Reference Signal Received Power (RSRP) value measured by the third wireless communication device on a reference signal sent by the first or second wireless communication device is not greater than a second threshold, or a Received Signal Strength Indicator (RSSI) value measured by the third wireless communication device on a signal sent by the first or second wireless communication device is not greater than a third threshold.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Thus, the disclosure is not intended to be limited to the implementations shown herein, but is to be accorded the widest scope consistent with the novel features and principles disclosed herein, as recited in the claims below.

**Claims**

1. A wireless communication method, comprising:

   sending, by a first wireless communication device (104a) to one or more second wireless communication devices (104b) via a sidelink communication, a message including first information and second information, wherein the first information includes a first identification of the first wireless communication device (104a) and that the first wireless communication device is a timing reference node of a group, and the second information includes a second identification of the one or more second wireless communication devices (104b), and wherein the first wireless communication device (104a) is configured to serve as the timing reference node of the group for positioning, while the one or more second wireless communication devices (104b) are each configured to serve as a non-timing reference node of the group.

2. The wireless communication method of claim 1, wherein each of the first wireless communication device (104a) and the one or more second wireless communication devices (104b) is an anchor node.

3. The wireless communication method of claim 1, wherein the first wireless communication device (104a) serves as the timing reference node of the group, while the one or more second wireless communication devices (104b) each serve as the non-timing reference node of the group, and wherein the group is created by at least one of: a Road Side Unit (RSU), a base station, or a positioning server.

4. The wireless communication method of claim 1, further comprising:

creating, by the first wireless communication device (104a), the group to include the one or more second wireless communication devices (104b),

wherein the first wireless communication device (104a) serves as the timing reference node of the group, while the one or more second wireless communication devices each serve as the non-timing reference node of the group (104b).

5. The wireless communication method of claim 1, wherein the message further includes third information, and wherein the first information includes a first identification of the first wireless communication device (104a) and whether the first wireless communication device (104a) is the timing reference node of the group, and the third information includes a second identification of the group.

6. The wireless communication method of claim 1, wherein the first information includes a first identification of the first wireless communication device (104a) and whether the first wireless communication device (104a) is the timing reference node of the group.

7. The wireless communication method of claim 1, wherein the first wireless communication device (104a) serves as the timing reference node of the group, while the one or more second wireless communication devices (104b) each serve as the non-timing reference node of the group, and

wherein the group further includes at least another first wireless communication device that is also configured to serve as the timing reference node of the group, respective transmission timings of those first wireless communication devices being aligned with each other.

8. The wireless communication method of claim 1, wherein timings of the first (104a) and one or more second wireless communication devices (104b) transmitting respective positioning reference signals are within a time duration.

9. The wireless communication method of claim 8, wherein the first wireless communication device (104a) transmits the positioning reference signal earlier than any of the one or more second wireless communication devices (104b), and serves as the timing reference node of the group, while the one or more second wireless communication devices (104b) each serve as the non-timing reference node of the group.

10. The wireless communication method of claim 1, wherein the first wireless communication device (104a) serves as the timing reference node of the group, while the one or more second wireless communication devices (104b) each serve as the non-timing reference node of the group, and

wherein a distance difference value between a first location of the first wireless communication device (104a) and a second location of each of the one or more second wireless communication devices (104b) is not greater a first threshold, a Reference Signal Received Power (RSRP) value measured by the second wireless communication device on a reference signal sent by the first wireless communication device (104a) is not greater than a second threshold, or a Received Signal Strength Indicator (RSSI) value measured by the second wireless communication device on a signal sent by the first wireless communication device (104a) is not greater than a third threshold.

11. The wireless communication method of claim 1, further comprising:
triggering, by the first wireless communication device (104a), one or more the second wireless communication devices (104b) to send positioning reference signals.

12. A wireless communication method, comprising:

sending, by a second wireless communication device to a third wireless communication device via a sidelink communication, a message including first information and second information,

wherein the second information includes a second identification of the second wireless communication device, and the first information includes a first identification of a first wireless communication device and that the first wireless communication device is a timing reference node of a group, and

wherein the first wireless communication device is configured to serve as the timing reference node of the group for positioning, while the second wireless communication devices is configured to serve as a non-timing reference node of the group.

13. The wireless communication method of claim 12, wherein the message further includes third information, and

wherein the second information includes a third identification of the second wireless communication device and whether the second wireless communication device is the timing reference node of the group, and the third information includes a second identification of the group; or

wherein the second information includes a third identification of the second wireless communication device and whether the second wireless communication device is the timing reference node of the group; or

wherein the message further includes third information,

wherein the second information includes a third identification of the second wireless communication device, and the third information includes a second identification of the timing reference node, and

wherein the third identification is not identical to the second identification; or

wherein the first wireless communication device serves as the timing reference node of the group, while the second wireless communication devices serves as the non-timing reference node of the group, and wherein the group is created by at least one of: a Road Side Unit (RSU), a base station, or a positioning server; or

wherein the first wireless communication device serves as the timing reference node of the group, while the second wireless communication device serves as the non-timing reference node of the group, the method further comprises:

    determining, by the second wireless communication device, a timing difference between a first transmission timing of the first wireless communication device and a second transmission timing of the second wireless communication device at least based on the second transmission timing, and a propagation delay between the first wireless communication device and the second wireless communication device; or

    wherein the first wireless communication device serves as the timing reference node of the group, while the second wireless communication device serves as the non-timing reference node of the group, the method further comprises:

    determining, by the second wireless communication device, a timing difference between a first transmission timing of the first wireless communication device and a second transmission timing of the second wireless communication device at least based on locations of one or more symbols that the first wireless communication device transmits a positioning reference signal, the second transmission timing, and a propagation delay between the first wireless communication device and the second wireless communication device.

**14.** A first wireless communication device, comprising:
at least one processor configured to:

    send, via a transmitter to one or more second wireless communication devices via a sidelink communication, a message including first information and second information,

    wherein the first information includes a first identification of the first wireless communication device and that the first wireless communication device is a timing reference node of a group, and the second information includes a second identification of the one or more second wireless communication devices; and

    wherein the first wireless communication device is configured to serve as the timing reference node of the group for positioning, while the one or more second wireless communication devices are each configured to serve as a non-timing reference node of the group.

**15.** A second wireless communication device, comprising:
at least one processor configured to:

    send, via a transmitter to a third wireless communication device via a sidelink communication, a message including first information and second information,

    wherein the second information includes a second identification of the second wireless communication device, and the first information includes a first identification of a first wireless communication device and that the first wireless communication device is a timing reference node of a group, and

    wherein the first wireless communication device is configured to serve as the timing reference node of the group for positioning, while the second wireless communication devices is configured to serve as a non-timing reference node of the group.

**Patentansprüche**

**1.** Drahtloses Kommunikationsverfahren, umfassend:

Senden einer Nachricht, die erste Informationen und zweite Informationen einschließt, durch eine erste drahtlose Kommunikationsvorrichtung (104a) an eine oder mehrere zweite drahtlose Kommunikationsvorrichtungen (104b) über eine Sidelink-Kommunikation,

wobei die ersten Informationen eine erste Identifikation der ersten drahtlosen Kommunikationsvorrichtung (104a) und eine Angabe, dass die erste drahtlose Kommunikationsvorrichtung ein Zeitreferenzknoten einer Gruppe ist, einschließen, und die zweiten Informationen eine zweite Identifikation der einen oder der mehreren zweiten drahtlosen Kommunikationsvorrichtungen (104b) einschließen, und

wobei die erste drahtlose Kommunikationsvorrichtung (104a) konfiguriert ist, um als Zeitreferenzknoten der Gruppe zur Positionsbestimmung zu dienen, während die eine oder die mehreren zweiten drahtlosen Kommunikationsvorrichtungen (104b) jeweils konfiguriert sind, um als Nicht-Zeitreferenzknoten der Gruppe zu dienen.

2. Drahtloses Kommunikationsverfahren nach Anspruch 1, wobei die erste drahtlose Kommunikationsvorrichtung (104a) und die eine oder die mehreren zweiten drahtlosen Kommunikationsvorrichtungen (104b) jeweils ein Ankerknoten sind.

3. Drahtloses Kommunikationsverfahren nach Anspruch 1, wobei die erste drahtlose Kommunikationsvorrichtung (104a) als der Zeitreferenzknoten der Gruppe dient, während die eine oder die mehreren zweiten drahtlosen Kommunikationsvorrichtungen (104b) jeweils als Nicht-Zeitreferenzknoten der Gruppe dienen, und wobei die Gruppe durch mindestens eines erstellt wird von: einer Road-Side-Unit, RSU, einer Basisstation oder einem Positionierungsserver.

4. Drahtloses Kommunikationsverfahren nach Anspruch 1, ferner umfassend:

   Erstellen der Gruppe durch die erste drahtlose Kommunikationsvorrichtung (104a), um die eine oder die mehreren zweiten drahtlosen Kommunikationsvorrichtungen (104b) einzuschließen,

   wobei die erste drahtlose Kommunikationsvorrichtung (104a) als Zeitreferenzknoten der Gruppe dient, während die eine oder die mehreren zweiten drahtlosen Kommunikationsvorrichtungen jeweils als Nicht-Zeitreferenzknoten der Gruppe (104b) dienen.

5. Drahtloses Kommunikationsverfahren nach Anspruch 1, wobei die Nachricht ferner dritte Informationen einschließt, und

   wobei die ersten Informationen eine erste Identifikation der ersten drahtlosen Kommunikationsvorrichtung (104a) und eine Angabe, ob die erste drahtlose Kommunikationsvorrichtung (104a) der Zeitreferenzknoten der Gruppe ist, einschließen, und die dritten Informationen eine zweite Identifikation der Gruppe einschließen.

6. Drahtloses Kommunikationsverfahren nach Anspruch 1, wobei die ersten Informationen eine erste Identifikation der ersten drahtlosen Kommunikationsvorrichtung (104a) und eine Angabe, ob die erste drahtlose Kommunikationsvorrichtung (104a) der Zeitreferenzknoten der Gruppe ist, einschließen.

7. Drahtloses Kommunikationsverfahren nach Anspruch 1, wobei die erste drahtlose Kommunikationsvorrichtung (104a) als der Zeitreferenzknoten der Gruppe dient, während die eine oder die mehreren zweiten drahtlosen Kommunikationsvorrichtungen (104b) jeweils als Nicht-Zeitreferenzknoten der Gruppe dienen, und wobei die Gruppe ferner mindestens eine weitere erste drahtlose Kommunikationsvorrichtung einschließt, die ebenfalls konfiguriert ist, um als Zeitreferenzknoten der Gruppe zu dienen, wobei die jeweiligen Übertragungszeitpunkte dieser ersten drahtlosen Kommunikationsvorrichtungen aufeinander abgestimmt sind.

8. Drahtloses Kommunikationsverfahren nach Anspruch 1, wobei die Zeitpunkte der ersten (104a) und einer oder mehrerer zweiter drahtloser Kommunikationsvorrichtungen (104b), die jeweilige Positionierungsreferenzsignale übertragen, innerhalb einer Zeitdauer liegen.

9. Drahtloses Kommunikationsverfahren nach Anspruch 8, wobei die erste drahtlose Kommunikationsvorrichtung (104a) das Positionierungsreferenzsignal früher überträgt als jede der einen oder mehreren zweiten drahtlosen Kommunikationsvorrichtungen (104b), und als Zeitreferenzknoten der Gruppe dient, während die eine oder die mehreren zweiten drahtlosen Kommunikationsvorrichtungen (104b) jeweils als Nicht-Zeitreferenzknoten der Gruppe dienen.

10. Drahtloses Kommunikationsverfahren nach Anspruch 1, wobei die erste drahtlose Kommunikationsvorrichtung (104a) als der Zeitreferenzknoten der Gruppe dient, während die eine oder die mehreren zweiten drahtlosen Kommunikationsvorrichtungen (104b) jeweils als Nicht-Zeitreferenzknoten der Gruppe dienen, und

wobei ein Entfernungsdifferenzwert zwischen einer ersten Position der ersten drahtlosen Kommunikationsvorrichtung (104a) und einer zweiten Position jeder der einen oder der mehreren zweiten drahtlosen Kommunikationsvorrichtungen (104b) nicht größer als ein erster Schwellenwert ist, ein von der zweiten drahtlosen Kommunikationsvorrichtung gemessener Wert der Referenzsignalempfangsleistung, RSRP, für ein von der ersten drahtlosen Kommunikationsvorrichtung (104a) gesendetes Referenzsignal nicht größer als ein zweiter Schwellenwert ist, oder ein von der zweiten drahtlosen Kommunikationsvorrichtung gemessener Wert des Empfangssignalstärkeindikators, RSSI, für ein von der ersten drahtlosen Kommunikationsvorrichtung (104a) gesendetes Signal nicht größer als ein dritter Schwellenwert ist.

11. Drahtloses Kommunikationsverfahren nach Anspruch 1, ferner umfassend:
Auslösen einer oder mehrerer der zweiten drahtlosen Kommunikationsvorrichtungen (104b) durch die erste drahtlose Kommunikationsvorrichtung (104a), um Positionierungsreferenzsignale zu senden.

12. Drahtloses Kommunikationsverfahren, umfassend:

Senden einer Nachricht, die erste Informationen und zweite Informationen einschließt, durch eine zweite drahtlose Kommunikationsvorrichtung an eine dritte drahtlose Kommunikationsvorrichtung über eine Sidelink-Kommunikation,
wobei die zweiten Informationen eine zweite Identifikation der zweiten drahtlosen Kommunikationsvorrichtung einschließen, und die ersten Informationen eine erste Identifikation einer ersten drahtlosen Kommunikationsvorrichtung und eine Angabe, dass die erste drahtlose Kommunikationsvorrichtung ein Zeitreferenzknoten einer Gruppe ist, einschließen, und
wobei die erste drahtlose Kommunikationsvorrichtung konfiguriert ist, um als Zeitreferenzknoten der Gruppe zur Positionsbestimmung zu dienen, während die zweite drahtlose Kommunikationsvorrichtung konfiguriert ist, um als Nicht-Zeitreferenzknoten der Gruppe zu dienen.

13. Drahtloses Kommunikationsverfahren nach Anspruch 12, wobei die Nachricht ferner dritte Informationen einschließt und

wobei die zweiten Informationen eine dritte Identifikation der zweiten drahtlosen Kommunikationsvorrichtung und eine Angabe, ob die zweite drahtlose Kommunikationsvorrichtung der Zeitreferenzknoten der Gruppe ist, einschließen, und die dritten Informationen eine zweite Identifikation der Gruppe einschließen; oder
wobei die zweiten Informationen eine dritte Identifikation der zweiten drahtlosen Kommunikationsvorrichtung und eine Angabe, ob die zweite drahtlose Kommunikationsvorrichtung der Zeitreferenzknoten der Gruppe ist, einschließen; oder
wobei die Nachricht ferner dritte Informationen einschließt,
wobei die zweiten Informationen eine dritte Identifikation der zweiten drahtlosen Kommunikationsvorrichtung einschließen, und die dritten Informationen eine zweite Identifikation des Zeitreferenzknotens einschließen und wobei die dritte Identifikation nicht mit der zweiten Identifikation identisch ist; oder
wobei die erste drahtlose Kommunikationsvorrichtung als der Zeitreferenzknoten der Gruppe dient, während die zweite drahtlose Kommunikationsvorrichtung als der Nicht-Zeitreferenzknoten der Gruppe dient, und wobei die Gruppe durch mindestens eines erstellt wird von: einer Road-Side-Unit, RSU, einer Basisstation oder einem Positionierungsserver; oder
wobei die erste drahtlose Kommunikationsvorrichtung als der Zeitreferenzknoten der Gruppe dient, während die zweite drahtlose Kommunikationsvorrichtung als Nicht-Zeitreferenzknoten der Gruppe dient, das Verfahren umfasst ferner:

Bestimmen einer Zeitdifferenz zwischen einem ersten Übertragungszeitpunkt der ersten drahtlosen Kommunikationsvorrichtung und einem zweiten Übertragungszeitpunkt der zweiten drahtlosen Kommunikationsvorrichtung durch die zweite drahtlose Kommunikationsvorrichtung, mindestens basierend auf dem zweiten Übertragungszeitpunkt, und einer Ausbreitungsverzögerung zwischen der ersten drahtlosen Kommunikationsvorrichtung und der zweiten drahtlosen Kommunikationsvorrichtung; oder
wobei die erste drahtlose Kommunikationsvorrichtung als der Zeitreferenzknoten der Gruppe dient, während die zweite drahtlose Kommunikationsvorrichtung als Nicht-Zeitreferenzknoten der Gruppe dient, das Verfahren umfasst ferner:
Bestimmen einer Zeitdifferenz zwischen einem ersten Übertragungszeitpunkt der ersten drahtlosen Kommunikationsvorrichtung und einem zweiten Übertragungszeitpunkt der zweiten drahtlosen Kommunikationsvorrichtung durch die zweite drahtlose Kommunikationsvorrichtung, mindestens basierend auf Positionen von einem oder mehreren Symbolen, dass die erste drahtlose Kommunikationsvorrichtung ein Positionierungsreferenzsignal überträgt, dem zweiten Übertragungszeitpunkt, und einer Ausbreitungsverzögerung zwischen der ersten drahtlosen Kommunikationsvorrichtung und der zweiten drahtlosen Kommunikationsvorrichtung.

14. Erste drahtlose Kommunikationsvorrichtung, umfassend:
mindestens einen Prozessor, der konfiguriert ist zum:

Senden einer Nachricht, die erste Informationen und zweite Informationen einschließt, über einen Sender an eine oder mehrere zweite drahtlose Kommunikationsvorrichtungen über eine Sidelink-Kommunikation,
wobei die ersten Informationen eine erste Identifikation der ersten drahtlosen Kommunikationsvorrichtung und eine Angabe, dass die erste drahtlose Kommunikationsvorrichtung ein Zeitreferenzknoten einer Gruppe ist, einschließen, und die zweiten Informationen eine zweite Identifikation der einen oder der mehreren zweiten drahtlosen Kommunikationsvorrichtungen einschließen; und
wobei die erste drahtlose Kommunikationsvorrichtung konfiguriert ist, um als Zeitreferenzknoten der Gruppe zur Positionsbestimmung zu dienen, während die eine oder die mehreren zweiten drahtlosen Kommunikationsvorrichtungen jeweils konfiguriert sind, um als Nicht-Zeitreferenzknoten der Gruppe zu dienen.

15. Zweite drahtlose Kommunikationsvorrichtung, umfassend:
mindestens einen Prozessor, der konfiguriert ist zum:

Senden einer Nachricht, die erste Informationen und zweite Informationen einschließt, über einen Sender an eine dritte drahtlose Kommunikationsvorrichtung über eine Sidelink-Kommunikation,
wobei die zweiten Informationen eine zweite Identifikation der zweiten drahtlosen Kommunikationsvorrichtung einschließen, und die ersten Informationen eine erste Identifikation einer ersten drahtlosen Kommunikationsvorrichtung und eine Angabe, dass die erste drahtlose Kommunikationsvorrichtung ein Zeitreferenzknoten einer Gruppe ist, einschließen, und
wobei die erste drahtlose Kommunikationsvorrichtung konfiguriert ist, um als Zeitreferenzknoten der Gruppe zur Positionsbestimmung zu dienen, während die zweite drahtlose Kommunikationsvorrichtung konfiguriert ist, um als Nicht-Zeitreferenzknoten der Gruppe zu dienen.

## Revendications

1. Procédé de communication sans fil, comprenant :

l'envoi, par un premier dispositif de communication sans fil (104a) à un ou plusieurs deuxièmes dispositifs de communication sans fil (104b) par l'intermédiaire d'une communication de liaison latérale, d'un message comportant des premières informations et des deuxièmes informations,
dans lequel les premières informations comportent une première identification du premier dispositif de communication sans fil (104a) et le fait que le premier dispositif de communication sans fil est un nœud de référence de synchronisation d'un groupe, et les deuxièmes informations comportent une deuxième identification du ou des deuxièmes dispositifs de communication sans fil (104b), et
dans lequel le premier dispositif de communication sans fil (104a) est configuré pour servir de nœud de référence de synchronisation du groupe pour un positionnement, tandis que le ou les deuxièmes dispositifs de communication sans fil (104b) sont chacun configurés pour servir de nœud de référence de non-synchronisation du groupe.

2. Procédé de communication sans fil selon la revendication 1, dans lequel chacun parmi le premier dispositif de communication sans fil (104a) et le ou les deuxièmes dispositifs de communication sans fil (104b) est un nœud d'ancrage.

3. Procédé de communication sans fil selon la revendication 1, dans lequel le premier dispositif de communication sans fil (104a) sert de nœud de référence de synchronisation du groupe, tandis que le ou les deuxièmes dispositifs de communication sans fil (104b) servent chacun de nœud de référence de non-synchronisation du groupe, et dans lequel le groupe est créé par au moins l'un parmi : une unité de bord de route (RSU), une station de base ou un serveur de positionnement.

**EP 4 402 966 B1**

4.  Procédé de communication sans fil selon la revendication 1, comprenant en outre :

    la création, par le premier dispositif de communication sans fil (104a), du groupe afin qu'il comporte le ou les deuxièmes dispositifs de communication sans fil (104b),
    dans lequel le premier dispositif de communication sans fil (104a) sert de nœud de référence de synchronisation du groupe, tandis que le ou les deuxièmes dispositifs de communication sans fil servent chacun de nœud de référence de non-synchronisation du groupe (104b).

5.  Procédé de communication sans fil selon la revendication 1, dans lequel le message comporte en outre des troisièmes informations, et
    dans lequel les premières informations comportent une première identification du premier dispositif de communication sans fil (104a) et le fait de savoir si le premier dispositif de communication sans fil (104a) est le nœud de référence de synchronisation du groupe, et les troisièmes informations comportent une deuxième identification du groupe.

6.  Procédé de communication sans fil selon la revendication 1, dans lequel les premières informations comportent une première identification du premier dispositif de communication sans fil (104a) et le fait de savoir si le premier dispositif de communication sans fil (104a) est le nœud de référence de synchronisation du groupe.

7.  Procédé de communication sans fil selon la revendication 1, dans lequel le premier dispositif de communication sans fil (104a) sert de nœud de référence de synchronisation du groupe, tandis que le ou les deuxièmes dispositifs de communication sans fil (104b) servent chacun de nœud de référence de non-synchronisation du groupe, et
    dans lequel le groupe comporte en outre au moins un autre premier dispositif de communication sans fil qui est également configuré pour servir de nœud de référence de synchronisation du groupe, des synchronisations de transmission respectives de ces premiers dispositifs de communication sans fil étant alignées les unes sur les autres.

8.  Procédé de communication sans fil selon la revendication 1, dans lequel des synchronisations du premier (104a) et du ou des deuxièmes dispositifs de communication sans fil (104b) transmettant des signaux de référence de positionnement respectifs sont comprises dans une durée de temps.

9.  Procédé de communication sans fil selon la revendication 8, dans lequel le premier dispositif de communication sans fil (104a) transmet le signal de référence de positionnement plus tôt que l'un quelconque parmi le ou les deuxièmes dispositifs de communication sans fil (104b), et sert de nœud de référence de synchronisation du groupe, tandis que le ou les deuxièmes dispositifs de communication sans fil (104b) servent chacun de nœud de référence de non-synchronisation du groupe.

10. Procédé de communication sans fil selon la revendication 1, dans lequel le premier dispositif de communication sans fil (104a) sert de nœud de référence de synchronisation du groupe, tandis que le ou les deuxièmes dispositifs de communication sans fil (104b) servent chacun de nœud de référence de non-synchronisation du groupe, et
    dans lequel une valeur de différence de distance entre un premier emplacement du premier dispositif de communication sans fil (104a) et un second emplacement de chacun parmi le ou les deuxièmes dispositifs de communication sans fil (104b) n'est pas supérieure à un premier seuil, une valeur de puissance reçue de signal de référence (RSRP) mesurée par le deuxième dispositif de communication sans fil sur un signal de référence envoyé par le premier dispositif de communication sans fil (104a) n'est pas supérieure à un deuxième seuil, ou une valeur d'indicateur d'intensité de signal reçu (RSSI) mesurée par le deuxième dispositif de communication sans fil sur un signal envoyé par le premier dispositif de communication sans fil (104a) n'est pas supérieure à un troisième seuil.

11. Procédé de communication sans fil selon la revendication 1, comprenant en outre :
    le déclenchement, par le premier dispositif de communication sans fil (104a), d'un ou de plusieurs des deuxièmes dispositifs de communication sans fil (104b) pour envoyer des signaux de référence de positionnement.

12. Procédé de communication sans fil, comprenant :

    l'envoi, par un deuxième dispositif de communication sans fil à un troisième dispositif de communication sans fil par l'intermédiaire d'une communication de liaison latérale, d'un message comportant des premières informations et des deuxièmes informations,
    dans lequel les deuxièmes informations comportent une deuxième identification du deuxième dispositif de communication sans fil, et les premières informations comportent une première identification d'un premier dispositif de communication sans fil et le fait que le premier dispositif de communication sans fil est un nœud de référence de synchronisation d'un groupe, et

dans lequel le premier dispositif de communication sans fil est configuré pour servir de nœud de référence de synchronisation du groupe pour un positionnement, tandis que les deuxièmes dispositifs de communication sans fil sont configurés pour servir de nœud de référence de non-synchronisation du groupe.

13. Procédé de communication sans fil selon la revendication 12, dans lequel le message comporte en outre des troisièmes informations, et

dans lequel les deuxièmes informations comportent une troisième identification du deuxième dispositif de communication sans fil et le fait de savoir si le deuxième dispositif de communication sans fil est le nœud de référence de synchronisation du groupe, et les troisièmes informations comportent une deuxième identification du groupe ; ou

dans lequel les deuxièmes informations comportent une troisième identification du deuxième dispositif de communication sans fil et le fait de savoir si le deuxième dispositif de communication sans fil est le nœud de référence de synchronisation du groupe ; ou

dans lequel le message comporte en outre des troisièmes informations,

dans lequel les deuxièmes informations comportent une troisième identification du deuxième dispositif de communication sans fil et les troisièmes informations comportent une deuxième identification du nœud de référence de synchronisation, et

dans lequel la troisième identification n'est pas identique à la deuxième identification ; ou

dans lequel le premier dispositif de communication sans fil sert de nœud de référence de synchronisation du groupe, tandis que le deuxième dispositif de communication sans fil sert de nœud de référence de non-synchronisation du groupe, et dans lequel le groupe est créé par au moins l'un parmi : une unité de bord de route (RSU), une station de base ou un serveur de positionnement ; ou

dans lequel le premier dispositif de communication sans fil sert de nœud de référence de synchronisation du groupe, tandis que le deuxième dispositif de communication sans fil sert de nœud de référence de non-synchronisation du groupe, le procédé comprend en outre :

la détermination, par le deuxième dispositif de communication sans fil, d'une différence de synchronisation entre une première synchronisation de transmission du premier dispositif de communication sans fil et une seconde synchronisation de transmission du deuxième dispositif de communication sans fil au moins sur la base de la seconde synchronisation de transmission, et d'un délai de propagation entre le premier dispositif de communication sans fil et le deuxième dispositif de communication sans fil ; ou

dans lequel le premier dispositif de communication sans fil sert de nœud de référence de synchronisation du groupe, tandis que le deuxième dispositif de communication sans fil sert de nœud de référence de non-synchronisation du groupe, le procédé comprend en outre :

la détermination, par le deuxième dispositif de communication sans fil, d'une différence de synchronisation entre une première synchronisation de transmission du premier dispositif de communication sans fil et une seconde synchronisation de transmission du deuxième dispositif de communication sans fil, au moins sur la base d'emplacements d'un ou de plusieurs symboles indiquant que le premier dispositif de communication sans fil transmet un signal de référence de positionnement, de la seconde synchronisation de transmission, et d'un délai de propagation entre le premier dispositif de communication sans fil et le deuxième dispositif de communication sans fil.

14. Premier dispositif de communication sans fil, comprenant :
au moins un processeur configuré pour :

envoyer, par l'intermédiaire d'un émetteur, à un ou plusieurs deuxièmes dispositifs de communication sans fil, par l'intermédiaire d'une communication de liaison latérale, un message comportant des premières informations et des deuxièmes informations,

dans lequel les premières informations comportent une première identification du premier dispositif de communication sans fil et le fait que le premier dispositif de communication sans fil est un nœud de référence de synchronisation d'un groupe, et les deuxièmes informations comportent une deuxième identification du ou des deuxièmes dispositifs de communication sans fil ; et

dans lequel le premier dispositif de communication sans fil est configuré pour servir de nœud de référence de synchronisation du groupe pour un positionnement, tandis que le ou les deuxièmes dispositifs de communication sans fil sont chacun configurés pour servir de nœud de référence de non-synchronisation du groupe.

**15.** Deuxième dispositif de communication sans fil, comprenant :
au moins un processeur configuré pour :

envoyer, par l'intermédiaire d'un émetteur, à un troisième dispositif de communication sans fil par l'intermédiaire d'une communication de liaison latérale, un message comportant des premières informations et des deuxièmes informations,

dans lequel les deuxièmes informations comportent une deuxième identification du deuxième dispositif de communication sans fil, et les premières informations comportent une première identification d'un premier dispositif de communication sans fil et le fait que le premier dispositif de communication sans fil est un nœud de référence de synchronisation d'un groupe, et

dans lequel le premier dispositif de communication sans fil est configuré pour servir de nœud de référence de synchronisation du groupe pour un positionnement, tandis que les deuxièmes dispositifs de communication sans fil sont configurés pour servir de nœud de référence de non-synchronisation du groupe.

FIG. 1A

FIG. 1B

First set of
nodes

Second set of
nodes

⬤   Timing reference node (head node)

•   Non-timing reference node (member node)

FIG. 2

FIG. 3

A set of
nodes

Timing reference
⬤   node

Non-timing
•   reference node

FIG. 4

FIG. 5

starting
point

offset

duration

P

First cycle

duration

P

Second
cycle

. . .

duration

P

N-th cycle

t

FIG. 6

FIG. 7

FIG. 8

FIG. 9

FIG. 10

FIG. 11

FIG. 12

FIG. 13

2 OFDM symbol length

Transmission timing difference

One time unit = 0.5 nanoseconds

Number of time units N=4

FIG. 14

A set of nodes

⊛   Timing reference node
      in the group

•   Non-timing reference
      node in the group

○   Node to be located

Send PRS
Send PRS
Send PRS
Send PRS

FIG. 15

1600

1610 ⌇

Send, by a first wireless communication device to one or more second wireless communication devices via a sidelink communication, a message including first information and second information, wherein the first information is related to the first wireless communication device, and the second information is related to the one or more second wireless communication devices, wherein the first wireless communication device is configured to serve as a timing reference node of a group, while the one or more second wireless communication devices are each configured to serve as a non-timing reference node of the group

**FIG. 16**

1700

1710 —

> Send, by a second wireless communication device to a third wireless communication device via a sidelink communication, a message including first information and second information, wherein the second information is related to the second wireless communication device, and the first information is related to a first wireless communication device, wherein the first wireless communication device is configured to serve as a timing reference node of a group, while the second wireless communication devices is configured to serve as a non-timing reference node of the group

**FIG. 17**

1800

1810 ~ | Receive, by a third wireless communication device from a second wireless communication device via a sidelink communication, a message including second information, wherein the second information is related to the second wireless communication device, wherein the second wireless communication devices is configured to serve as a non-timing reference node of a group, while a first wireless communication device is configured to serve as the timing reference node of the group.

**FIG. 18**

**EP 4 402 966 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021219111 A1